Europäisches Patentamt

European Patent Office

Office européen des brevets

(19)

(11) Veröffentlichungsnummer: **0 201 573 B1**

# EUROPÄISCHE PATENTSCHRIFT
## veröffentlicht nach Art. 158 Abs. 3 EPÜ

(12)

(45) Veröffentlichungstag der Patentschrift: **27.02.91**

(21) Anmeldenummer: **85905775.4**

(22) Anmeldetag: **15.11.85**

(86) Internationale Anmeldenummer:
**PCT/DE85/00474**

(87) Internationale Veröffentlichungsnummer:
**WO 86/03036 (22.05.86 86/11)**

(51) Int. Cl.5: **G05F 1/45**, G05D 23/19,
F24H 9/20

(54) **VERFAHREN ZUM STUFENWEISEN EINSTELLEN EINER AN EINEM AN SPANNUNG ÜBER EINEN SCHALTER LIEGENDEN WIDERSTAND ANFALLENDEN ELEKTRISCHEN LEISTUNG UND SCHALTUNGSANORDNUNG ZUR DURCHFÜHRUNG DES VERFAHRENS.**

(30) Priorität: 16.11.84 DE 8434078 U
02.02.85 DE 8503143 U
02.02.85 DE 8503144 U
27.06.85 DE 8518904 U
27.06.85 DE 8518905 U
27.09.85 DE 8528000 U

(43) Veröffentlichungstag der Anmeldung:
20.11.86 Patentblatt 86/47

(45) Bekanntmachung des Hinweises auf die Patenterteilung:
27.02.91 Patentblatt 91/09

(84) Benannte Vertragsstaaten:
AT BE CH DE FR GB IT LI LU NL SE

(56) Entgegenhaltungen:
WO-A-83/01993

(73) Patentinhaber: **Joh. Vaillant GmbH u. Co.**
**Berghauser Strasse 40 Postfach 10 10 20**
**D-5630 Remscheid 1(DE)DE**

Patentinhaber: **n.v. Vaillant s.a.**
**rue Golden Hopestraat 15**
**B-1620 Drogenbos(BE)BE**

Patentinhaber: **VAILLANT S.A.R.L**
**4, Rue des Oliviers Orly-Sénia 326**
**F-94537 Rungis Cedex(FR)FR**

Patentinhaber: **VAILLANT Ges.m.b.H**
**Forchheimergasse 7 Postfach 56**
**A-1233 Wien(AT)AT**

Patentinhaber: **Vaillant Ltd.**
**Vaillant House Medway City Estate Trident Close**
**Rochester Kent ME2 4EZ(GB)GB**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

DE-A- 3 304 322
GB-A- 2 140 990


Deutsche Normen DIN IEC 77(CO) 4,5,6
(Entwurf, jeweils vom Dezember 1980)

Patentinhaber: **SCHONEWELLE B.V.**
**Ellermanstraat 17**
**NL-1099 BX Amsterdam(NL)NL**

Patentinhaber: **Vaillant GmbH**
**Riedstrasse 8**
**CH-8953 Dietikon 1(CH)CH**

(72) Erfinder: **SCHMIDT, Manfred**
**Kaulchensweg 34**
**D-5000 Köln 91(DE)**


(74) Vertreter: **Heim, Johann-Ludwig, Dipl.-Ing.**
**c/o Joh. Vaillant GmbH u. Co Berghauser**
**Strasse 40 Postfach 10 10 20**
**D-5630 Remscheid 1(DE)**

## EP 0 201 573 B1

**Beschreibung**

Die vorliegende Erfindung bezieht sich auf ein verfahren zum stufenweisen Einstellen einer an einem an Spannung liegenden, aus wenigstens zwei mit je einem Schalter in Reihe geschalteten Teilwiderständen zusammengesetzten Gesamtwiderstand anfallenden elektrischen Leistung gemäß dem Oberbegriff des Anspruches 1 und auf eine Schaltungsanordnung zur Durchführung des Verfahrens gemäß dem Oberbegriff des Anspruches 14.

Es ist bekannt, elektrische Durchlauferhitzer zur Beheizung von kaltem Brauchwasser einzusetzen, wobei diese Durchlauferhitzer entweder einphasig oder dreiphasig betrieben werden können. Im einfachsten Fall ist bei einphasigem Betrieb ein einziger Widerstand vorhanden, der von einem Wasserschalter bei Wasserdurchsatz an die Spannung des speisenden Netzes gelegt wird. Die Maximalleistung des Durchlauferhitzers ist damit durch den Widerstandswert des Widerstandes und die angelegte Spannung definiert. Bei einem an einem Dreiphasensystem liegenden Durchlauferhitzer sind in der Regel drei gleiche Widerstände an die Außenleiter des speisenden Netzes angeschlossen, die Leistung des Durchlauferhitzers ergibt sich hier analog aufgrund der Widerstandswerte und der anliegenden Dreiphasenspannung.

Es hat sich gezeigt, daß die Leistung eines solchen Durchlauferhitzers häufig zu klein oder auch bei geringem Zapfwasserdurchsatz zu groß ist. Zur Anpassung der Leistung ist schon vorgeschlagen worden, Widerstände mit Phasenanschnittsteuerung oder mit Schwingungspaketsteuerung zu betreiben. Die Phasenanschnittsteuerung ist bei Elektrowärmegeräten oberhalb einer bestimmten Leistung nicht zugelassen, die Schwingungspaketsteuerung führt bei der Anwendung auf große Leistungen generell zu einem unbefriedigenden Regelverhalten, wenn man die Bestimmungen über die Netzrückwirkungen einhalten will.

Bekannt ist eine in der WO-A-83/01993 beschriebene Anordnung mit einem Durchlauferhitzer und einem Speicher, die so mit Schwingungspaketsteuerung betrieben werden, daß alternativ entweder der Durchlauferhitzer oder der Speicher an Spannung anliegt.

Aus der GB-A-2140990 ist eine Anordnung bekannt, bei der eine oder zwei Reihenschaltungen aus je zwei Widerständen bestehen, wobei jeweils ein Endpunkt fest, der andere Endpunkt und der Verbindungspunkt über Triacs in Versorgung liegen. Die Bemessung der Widerstände ist derart, daß durch Schaltkombinationen der Triacs gleichmäßige Stufung entsteht. Schwingungspaketsteuerung ist nicht angegeben.

Weiterhin bekannt ist ein in der DE-A1-3304322 beschriebener elektrischer Durchlauferhitzer mit einer Steuereinrichtung, deren Analogsignal von einem Analog/Digital-Wandler in ein binäres Ausgangssignal umgesetzt wird, wobei an jedem Ausgang des Wandlers eine Heizkörperstufe angeschlossen ist.

Der Erfindung liegt die Aufgabe zugrunde, unter Verwendung eines Minimums an Teilwiderständen und Schaltelementen eine feineinstellbare größere elektrische Leistung (größer als 2 kW) über einen großen Bereich schnell darzustellen, wobei auftretende Netzrückwirkungen gemäß DIN IEC 77 (CO) 4, 5 und 8 innerhalb der als zulässig angesehenen Grenzen gehalten werden.

Die Lösung der Aufgabe ergibt sich aus den kennzeichnenden Merkmalen der unabhängigen Ansprüche.

Mit Hilfe dieser Maßnahme gelingt es, auf elektronischem Wege nahezu jede beliebige Teilleistung an einem ohmschen Verbraucher darstellen zu können und zwar sowohl stationär wie auch als Stellgröße in einem Regelkreis.

Es hat sich herausgestellt, daß mit den erfindungsgemäßen Verfahren bzw. den Schaltungsanordnungen nicht nur eine Leistungssteuerung bei einem elektrischen Durchlauferhitzer durchgeführt werden kann, sondern daß die Erfindung ebensogut auf alle anderen Elektrowärmegeräte wie insbesondere Herde und auch auf Lasten mit induktiven bzw. kapazitiven Anteilen anwendbar ist.

Unter dem gleichzeitigen Schalten ist zu verstehen, daß bei Wechselspannung bei den einzelnen Teilleistungen im jeweiligen Strom-Nulldurchgang der Leistungsstufe geschaltet wird. Toleranzen, die in den Widerständen oder die in den Schaltelementen liegen, bleiben außer Betracht. Wird bei dem Dreiphasensystem in mehreren, die Außenleiter verbindenden, Strängen geschaltet, so bedeutet gleichzeitiges Schalten ein aufeinanderfolgendes Schalten in den Strom-Nulldurchgängen dieser Stränge.

Wenn im folgenden von kleinen Widerständen gesprochen wird, so ist gemeint, daß an einem kleinen Widerstand eine kleine Leistung, an einem größeren Widerstand eine größere Leistung und an einem großen Widerstand eine große Leistung erzeugt wird. Es versteht sich, daß die Widerstandswerte sich zur Größe der Leistung umgekehrt proportional bei gleicher angelegter Spannung verhalten.

Es soll auch darauf hingewiesen werden, daß das gleichzeitige Schalten von wenigstens zwei Teilwiderständen nach der Erfindung unabhängig davon ist, ob zur Darstellung der Gesamtleistung zusätzlich ein oder mehrere Teilwiderstände dauernd an Spannung liegen oder nicht. Weitere Ausgestaltungen und besonders vorteilhafte Weiterbildungen der Erfindung sind den übrigen unabhängigen Ansprüchen sowie den weiteren abhängigen Ansprüchen zu entnehmen bzw. gehen aus der nachfolgenden Beschreibung

3

hervor, die mehrere Ausführungsbeispiele der Erfindung anhand der Figuren 1 - 10 näher erläutert.

Es zeigen:

Figur 1     eine Prinzipschaltung zur Erklärung des erfindungsgemäßen Prinzips,

Figur 2     Diagramme zur Erklärung der Wirkungsweise der Schaltung nach Figur 1,

Figur 3     eine detaillierte Schaltung,

Figur 4     Diagramme zur Erklärung der Wirkungsweise der Schaltung nach Figur 3,

Figur 5     Diagramme zur zusätzlichen Erklärung der Wirkungsweise der Schaltung nach Figur 3,

Figur 6     ein schaltungsmäßiges Ausführungsbeispiel zur Anwendung an einem Dreiphasensystem,

Figur 7     Diagramme zur Erklärung der Wirkungsweise der Schaltung nach Figur 6,

Figur 8     den mechanischen und elektrischen Aufbau eines dreiphasigen Durchlauferhitzers,

Figur 9     den Aufbau der Schaltung zur Steuerung der Leistung des Durchlauferhitzers nach Figur 8 und

Figur 10    ein weiteres Ausführungsbeispiel der Erfindung als Schaltung.

In allen Figuren bedeuten gleiche Bezugszeichen jeweils die gleichen Einzelheiten.

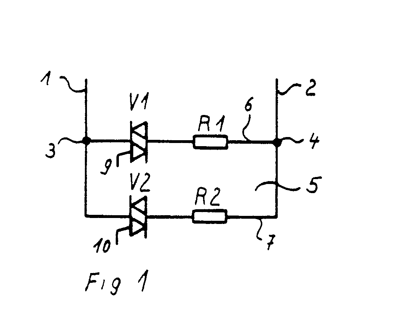

Die Schaltung nach Figur 1 weist zwei Leiter 1 und 2 auf, die bei einem Gleichspannungssystem die positive bzw. negative Spannungszuführung sein können, bei einem Einphasenwechselspannungssystem die Leiter $L_1$ und N und bei einem Dreiphasensystem zwei Außenleiter $L_1$ und $L_2$ sein können, wobei der dritte Außenleiter hierbei keine Berücksichtigung findet. Die Leiter 1 und 2 führen zu je einem Verzweigungspunkt 3 bzw. 4, an die eine Parallelschaltung 5 angeschlossen ist. Die Parallelschaltung besteht aus zwei Leitungszweigen 6 und 7, in denen in Reihe jeweils ein Widerstand $R_1$ bzw. $R_2$ mit einem zugehörigen Schalter $V_1$ bzw. $V_2$ liegt.

Die Widerstände $R_1$ und $R_2$ sind bevorzugt Widerstände eines Elektrowärmegerätes, können aber auch allgemein ohmsche oder komplexe, insbesondere induktive Widerstände sein. Die Schalter $V_1$ und $V_2$ sind insbesondere Triacs, können aber auch beliebige andere elektronische oder mechanische Schalter sein. Die Schalter können über Steuerelektroden 9 bzw. 10 in den leitenden oder gesperrten Zustand geschaltet werden. Die Teilwiderstände $R_1$ und $R_2$ bilden einen Widerstand, der zwischen den Leitern 1 und 2 angeschlossen ist, wobei diesem Widerstand eine bestimmte Leistungsstufe zugeordnet ist, die sich aus der anliegenden Spannung bei geschlossenen Schaltern $V_1$ und $V_2$ ihrer Höhe nach, bezogen auf den Widerstandswert, betragsmäßig ergibt. An den beiden Teilwiderständen $R_1$ oder/und $R_2$ können Teilleistungen bzw. Leistungsteilstufen abgenommen werden, die sich dann ergeben, wenn der zugehörige Teilwiderstand bei eingeschaltetem Schalter $V_1$ und/oder $V_2$ an Spannung liegt. Mittlere Teilleistungen können sich auch dadurch ergeben, daß periodisch der Schalter $V_1$ bzw $V_2$ geschlossen und geöffnet wird. Die Schalter $V_1$ und $V_2$ werden dazu bei angelegter Gleichspannung an die Leiter 1 und 2 impulsbreitengesteuert betrieben, bei anliegender Wechsel- oder auch Drehspannung schwingungspaketgesteuert. Die Widerstände $R_1$ und $R_2$ sind ungleich, insbesondere sind die Widerstände $R_1$ und $R_2$ um den Faktor 2 verschieden, so daß die Leistung bei Dauereinschaltung am Widerstand $R_2$ doppelt so groß wie die am Widerstand $R_1$ ist.

Die mit der Schaltung gemäß Figur 1 gesamt erzeugbare Leistung $P_{gesmax}$ setzt sich aus der Addition der Teilleistungen, die als Leistung $P_1$ am Widerstand $R_1$ bei permanent geschlossenem Schalter $V_1$ und der doppelt so großen Leistung $P_2$ zusammen, die am Widerstand $R_2$ bei ebenfalls permanent geschlossenem Schalter $V_2$ abfällt. Somit gilt folgende Gleichung

$$(1) \quad P_{gesmax} = P_1 + P_2$$

Sollen nun Teilleistungen von $P_{gesmax}$ dargestellt werden, die im folgenden als $P_{ges}$ bezeichnet werden, so besteht zum einen die Möglichkeit, einen der beiden Schalter $V_1$ bzw. $V_2$ generell zu öffnen.

Zum anderen besteht die Möglichkeit, den Schalter $V_1$ oder den Schalter $V_2$ oder beide Schalter periodisch impulsbreiten- bzw. schwingungspaketgesteuert zu betreiben, wobei sich eine Teilleistung $P_{ges}$ als Mittelwert über die Periodendauer der Impulsbreiten- bzw. Schwingungspaketsteuerung ergibt.

Entsprechend der Erfindung wird die Schaltung so betrieben, daß zum einen $P_{ges}$ über den ganzen Bereich von 0 bis $P_{gesmax}$ feinstufig einstellbar ist, wobei die Anwendung von Impulsbreiten- oder Schwingungspaketsteuerung auf den Schalter $V_2$ allein und damit auf die größere Leistung $P_2$ allein vermieden wird, um die damit verbundenen größeren Netzrückwirkungen als beim Schalten von $V_1$ allein zu vermeiden.

Die gleichzeitige Anwendung von Impulsbreiten- oder Schwingungspaketsteuerung auf beide Schalter $V_1$ und $V_2$ wird so durchgeführt, daß dabei nur Netzrückwirkungen wie beim Anwenden von Impulsbreiten-

oder Schwingungspaketsteuerung auf $V_1$ allein auftreten.

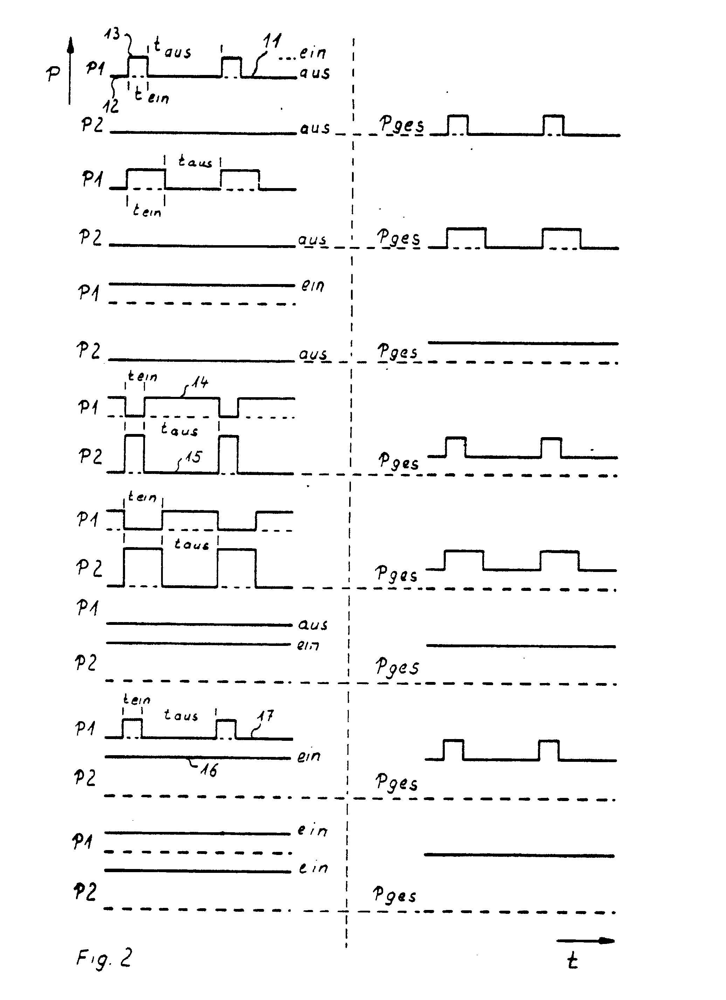

Die Wirkungsweise des Steuerungsverfahrens zur Einstellung von Teilleistungen $P_{ges}$ der Anordnung nach Figur 1 geht aus Figur 2 hervor. In den Diagrammen der Figur 2 sind die Zeitverläufe der Leistungen dargestellt. So zeigt der Kurvenzug 11 den Verlauf der Leistung $P_1$ in Abhängigkeit von der Zeit mit dem Maximalwert $P_1$ (13). Analoges gilt für $P_{ges}$. Bei der Anwendung von Wechselspannung geben die Kurvenzüge die Mittelwerte der Leistungen $P_1$ bzw. $P_{ges}$ über die Zeiten $t_{ein}$ bzw. $t_{aus}$ an. In den Gleichungen bezeichnet die Leistung $P_{ges}$ den Mittelwert der Leistung über die Gesamtzeit $t_{ein}$ und $t_{aus}$.

Zunächst soll die Anwendung von Gleichspannung betrachtet werden.

Im folgenden soll zunächst der Fall betrachtet werden, daß die Leistung $P_{ges}$ größer als 0 aber kleiner als die Leistung $P_1$ ist. In diesem Fall ist der Schalter $V_2$ permanent geöffnet und der Schalter $V_1$ wird durch Ansteuern der Elektrode 9 impulsbreitengesteuert, d. h. der Schalter $V_1$ wird für eine Zeit $t_{ein}$ geschlossen und für die Zeit $t_{aus}$ geöffnet. Der Kurvenzug 11 zeigt beispielhaft einen zeitlichen Leistungsverlauf an $R_1$, der bei geöffnetem Schalter $V_2$ dem Verlauf von $P_{ges}$ entspricht. Die Gesamtleistung $P_{ges}$ ergibt sich als Mittelwert zu

$$(2) \quad P_{ges} = P_1 \cdot \frac{t_{ein}}{t_{ein} + t_{aus}}$$

Durch Wahl der Zeit $t_{ein}$ bezogen auf die Zeit $t_{ein} + t_{aus}$ läßt sich somit bei angelegter Gleichspannung die Leistung $P_{ges}$ im Bereich von 0 bis $P_1$ stufenlos variieren. Ein weiterer Verlauf mit geänderten Zeiten $t_{ein}$ und $t_{aus}$ ist dargestellt.

Erfordert die Gesamtleistung $P_{ges}$ eine Leistung, die von $R_1$ nicht mehr erbracht werden kann, so ist es erforderlich, mit beiden Widerständen $R_1$ und $R_2$ zu arbeiten. Liegt die gewünschte Leistung $P_{ges}$ in einem Bereich kleiner als $P_2$ aber größer als $P_1$, so wird erfindungsgemäß so verfahren, daß für eine Zeit $t_{ein}$ der Schalter $V_2$ geschlossen wird. Damit wird für diese Zeit die Leistung $P_2$ dargestellt, gleichzeitig wird aber der Schalter $V_1$ geöffnet, so daß für exakt die gleiche Zeit die Leistung $P_1$ ausfällt. Während der folgenden Zeit $t_{aus}$ , die sich wie die Zeit $t_{ein}$ immer auf das Ein- bzw. Ausschalten des Widerstandes mit der größeren Leistung bezieht, ist die größere Leistung ausgeschaltet und die kleinere Leistung eingeschaltet.

Die Leistungsverläufe an $R_1$ und $R_2$ zeigen die Kurvenverläufe 14 und 15. $P_{ges}$ ergibt sich aus der Überlagerung.

Ein weiteres Beispiel mit veränderten Zeiten ist in der Figur 2 ebenfalls gezeigt. Somit resultieren zwar in den Zweigen 6 und 7 relativ große Leistungsänderungen, nicht aber in den Leitern 1 und 2, da sich hier nur die Überlagerung der geschalteten Leistungen auswirkt.

Die Gesamtleistung $P_{ges}$ ergibt sich zu

$$(3) \quad P_{ges} = P_1 + P_1 \cdot \frac{t_{ein}}{t_{ein} + t_{aus}}$$

Somit kann die Leistung $P_{ges}$ vergrößert werden bis zur Leistung $P_2$.

Reicht auch diese Leistung nicht aus, so wird über Schließen des Schalters $V_2$ die Leistung $P_2$ gemäß dem Kurvenzug 16 permanent zugeschaltet und die Leistung $P_1$ gemäß dem Kurvenzug 17 wieder getastet, bis im Maximum sowohl $P_1$ und $P_2$ permanent durch dauerndes Schließen beider Schalter anfallen. Somit wird in diesem Bereich die darstellbare Leistung

$$(4) \quad P_{ges} = P_2 + P_1 \cdot \frac{t_{ein}}{t_{ein} + t_{aus}} = 2 \cdot P_1 + P_1 \cdot \frac{t_{ein}}{t_{ein} + t_{aus}}$$

Bei Anwendung der Schaltung nach Figur 1 in einem Wechselspannungssystem wird anstelle der Impulsbreitensteuerung eine Schwingungspaketsteuerung angewandt.

Bei Schalten im Nulldurchgang des Stromes und bei Vollwellensteuerung gelangt somit während der Zeitdauer $t_{ein}$ wenigstens eine Netzvollwelle bzw. ein Vielfaches davon an den zugehörigen Widerstand. Damit tritt anstelle der kontinuierlichen Leistungssteuerung eine gestufte Steuerung, wobei der minimale Stufenschritt sich ergibt aus der Zeit für eine Netzvollwelle bezogen auf die Summe der Zeiten $t_{ein}$ + $t_{aus}$. Da diese Zeiten bezüglich der Dauer einer Netzvollwelle beliebig lang sein können, ergibt sich quasi wieder eine stetige Steuerung.

Gegenüber einer Tastung eines ungestuften Widerstandes mit einer identischen maximalen Gesamtleistung gemäß Gleichung (1) ergibt sich bei der Anwendung der Erfindung ein zeitlicher Verlauf der Gesamtleistung mit wesentlich kleineren Sprüngen sowie wesentlich geringeren Netzrückwirkungen (Flicker), da nur Leistungssprünge von einem Betrag von $P_1$ auftreten.

Gegenüber einer Aufteilung einer Gesamtleistung gemäß Gleichung (1) mit nur fest zu- oder abschaltbaren Teilwiderständen ergibt sich bei entsprechender Feinstufung eine wesentlich geringere Anzahl von Teilwiderständen und Schaltelementen.

Das Ausführungsbeispiel gemäß Figur 1 bezieht sich auf die Anwendung der Erfindung auf eine Herdplatte, deren Gesamtwiderstand in zwei Teilwiderstände aufgespalten ist.

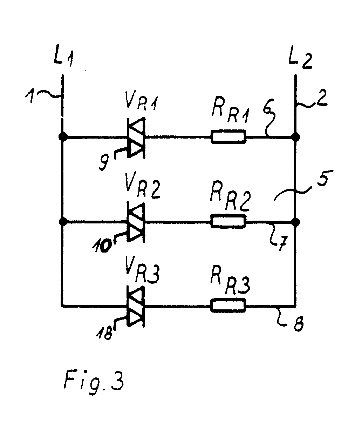

Beim Ausführungsbeispiel gemäß Figur 3 handelt es sich um die Fortführung der Anordnung nach Figur 1 mit drei ungleichen Teilwiderständen $R_{R1}$, $R_{R2}$ und $R_{R3}$, die alle drei zusammen den Gesamtwiderstand ergeben und ungleich gestuft sind. Die Stufung der Widerstandswerte ist dual, so daß bei Volleinschaltung des Schalters $V_{R1}$ am Widerstand $R_{R1}$ die Leistung $P_{R1}$ abfällt, bei Einschaltung des Schalters $V_{R2}$ am Widerstand $R_{R2}$ die doppelt so große Leistung $P_{R2}$ und bei Volleinschaltung des Schalters $V_{R3}$ am Widerstand $R_{R3}$ die Leistung $P_{R3}$ abfällt, die ihrerseits doppelt so groß ist wie die Leistung $P_{R2}$.

Zwischen den Außenleitern $L_1$ und $L_2$ entsprechend den Anschlüssen 1 und 2 liegt die verkettete Dreieckspannung in Höhe von 380 V an. Ein einphasiger Anschluß zwischen $L_1$ und N wäre analog möglich, nur treten dann andere Spannungs- und Leistungsverhältnisse auf.

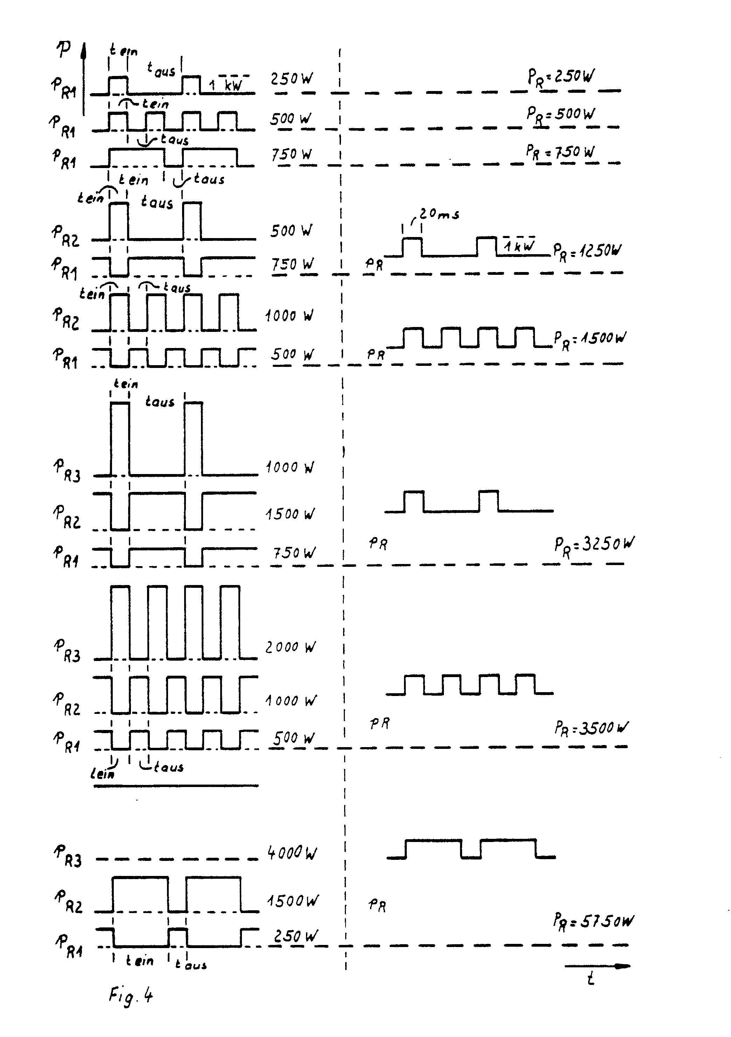

Im Ausführungsbeispiel beträgt die Leistung $P_{R1}$ - siehe Figur 4 - 1 kW.

Weil es sich um einen dreigestuften Widerstand handelt, liegt parallel zu dem Zweigen 6 und 7 ein dritter Zweig 8, der als Serienschaltung den Widerstand $R_{R3}$ in Verbindung mit seinem Schalter $V_{R3}$ aufweist, dessen Elektrode 18 ansteuerbar ist.

Zur Erläuterung der Wirkungsweise dieser Schaltung wird auf die Diagramme gemäß Figur 4 verwiesen. Die Diagramme der Figur 4 zeigen stationäre Leistungseinstellungen.

Für die Darstellung der Zeitverläufe und Mittelwerte der Leistung und der Maximalleistung gilt das eingangs zum Ausführungsbeispiel der Figur 1 Gesagte.

Dem Ausführungsbeispiel nach Figur 3 liegt die Idee zugrunde, die einzelnen Teilleistungen in Stufen von 250 W darzustellen und dies beginnend mit der Leistung 0 bis zur maximalen Strangleistung $P_{Rmax}$, die sich aus der Addition der Teilleistungen an den Widerständen $R_{R1}$ bis $R_{R3}$ bei permanent geschlossenen Schaltern $V_{R1}$ bis $V_{R2}$ zusammensetzt, gemäß der Beziehung nach Gleichung (5).

$$(5) \quad P_{Rmax} = P_{R1} + P_{R2} + P_{R3}.$$

Wie die erste Gruppe der Diagramme der Figur 4 ausweist, ist es nun möglich, zur Darstellung einer Leistung zwischen 0 und $P_{R1}$ = 1 kW die Schalter $V_{R2}$ und $V_{R3}$ zu sperren und den Schalter $V_{R1}$ schwingungspaketmäßig zu steuern, indem die Einschaltzeit $t_{ein}$ für die Schwingungen zwischen einer Periode und der Volleinschaltung variiert wird. Durch Wahl diskreter Tastverhältnisse $t_{ein}$ bezogen auf $t_{ein}$ + $t_{aus}$ können so Leistungen $P_R$ von 250, 500 und 750 W dargestellt werden, die sich als Mittelwerte über die Zeit $t_{ein}$ + $t_{aus}$ darstellen. Bei permanenter Einschaltung von $R_{R1}$ beträgt $P_R$ = 1 kW.

Die minimale Einschaltzeit $t_{ein}$ beträgt 20 ms (1 Netzperiode), das gleiche gilt für die minimale Ausschaltzeit $t_{aus}$. Die Summe beider Zeiten beträgt bei 250 W und 750 W Leistung 80 ms, bei 500 W jedoch nur 40 ms.

Allgemein gilt für die darstellbare Leistung in diesem Bereich

EP 0 201 573 B1

$$(6) \quad P_R = P_{R1} \cdot \frac{t_{ein}}{t_{ein} + t_{aus}}$$

Hinter den Diagrammverläufen sind jeweils die Mittelwerte der in den einzelnen Teilwiderständen auftretenden Leistungen bzw. der Mittelwert der Gesamtleistung $P_R$ angegeben.

Die zweite Gruppe der Diagramme beschäftigt sich mit dem Leistungsbereich zwischen 1 kW und 2 kW. Hierbei sind diskrete Leistungsdarstellungen von $P_R$ = 1250 und 1500 W herausgegriffen.

Diese Leistungen werden so dargestellt, daß der Schalter $V_{R3}$ generell geöffnet ist, während die Schalter $V_{R1}$ und $V_{R2}$ jeweils geöffnet und geschlossen werden, wobei jeweils nur einer der beiden Schalter leitend ist. Die Darstellung erfolgt erfindungsgemäß analog zu den Ausführungen der Figur 2 (Kurvenzüge 14 und 15).

Zur Darstellung der Leistung $P_R$ = 1250 W wird der Widerstand $R_{R2}$ durch Betätigen seines zugehörigen Schalters periodisch für die Zeiten $t_{ein}$ an Spannung gelegt und für $t_{aus}$ abgeschaltet, so daß bei dem Tastverhältnis von $t_{ein}$ zu $t_{ein}$ + $t_{aus}$ von 1/4 an ihm eine mittlere Leistung von 500 W erzeugt wird. Für die Zeiten $t_{ein}$ wird aber der Widerstand $R_{R1}$ für die gleiche Zeitdauer abgeschaltet, so daß an ihm für die Zeitdauer $t_{ein}$ keine Leistung erzeugt wird. Für die Zeiten $t_{aus}$, in denen der Widerstand $R_{R2}$ abgeschaltet ist, ist aber der Widerstand $R_{R1}$ eingeschaltet. Somit entsteht an $R_1$ bei dem vorliegendem Tastverhältnis eine mittlere Leistung von 750 W.

Aus der Sicht der Außenleiter $L_1$ und $L_2$ ergibt sich somit durch Überlagerung eine konstante Leistung von 1 kW, der Leistungsimpulse von einem weiteren kW mit einem Tastverhältnis $t_{ein}$ zu $t_{ein}$ + $t_{aus}$ überlagert sind, so daß sich eine mittlere Leistung von 1250 W ergibt.

Sinngemäß wird für die Leistung von $P_R$ = 1500 W verfahren, indem das Tastverhältnis $t_{ein}$ zu $t_{ein}$ + $t_{aus}$ auf 1/2 festgelegt wird und der Widerstand $R_{R1}$ wiederum entgegengesetzt getastet wird wie der Widerstand $R_{R2}$. Somit ergibt sich im Zweig 7 eine getastete Leistung von 2 kW, die einem Mittelwert von 1 kW entspricht. Da die Leistung am Widerstand $R_{R1}$ im gleichen Tastverhältnis weggeschaltet wird, wenn der Widerstand $R_{R2}$ an Spannung liegt, resultiert hier eine getastete Leistung von 1 kW mit einem Mittelwert von 500 W. Die Überlagerung beider Leistungen, die in den Außenleitern zur Wirkung kommt, enthält wieder eine konstante Leistung von 1 kW, überlagert von Leistungsimpulsen mit 1 kW.

Analoges gilt für die Darstellung der Leistung von $P_R$ = 1750 W.

Allgemein gilt für den Mittelwert der darstellbaren Leistung in diesem Bereich

$$(7) \quad P_R = P_{R1} + P_{R1} \cdot \frac{t_{ein}}{t_{ein} + t_{aus}}$$

Im Leistungsbereich zwischen 2 kW und 3 kW wird der Widerstand $R_{R2}$ permanent an Spannung gelegt und der Widerstand $R_{R1}$ schwingungspaketgesteuert getaktet, womit allgemein für die darstellbare Leistung in diesem Bereich gilt

$$(8) \quad P_R = 2 \cdot P_{R1} + P_{R1} \cdot \frac{t_{ein}}{t_{ein} + t_{aus}}$$

Im Leistungsbereich von 3 kW bis 4 kW wird der Zweig 8 mit einbezogen. Dabei wird das erfindungsbedingte Prinzip des Tastens eines größeren Teilwiderstandes ($R_{R3}$) und des gleichzeitigen entgegengesetzten Tastens aller kleineren Teilwiderstände ($R_{R2}$ und $R_{R1}$) angewandt. Zur Darstellung der Leistung von 3250 W wird über den zugehörigen Schalter $V_{R3}$ der Widerstand $R_{R3}$ periodisch während $t_{ein}$ an Spannung gelegt und während $t_{aus}$ abgeschaltet, wobei das Tastverhältnis $t_{ein}$ zu $t_{ein}$ + $t_{aus}$ auf 1/4 festgelegt wird. An $R_{R3}$ fällt während der Einschaltzeit $t_{ein}$ eine Leistung von 4 kW ab, da er aber getastet wird, resultiert eine

7

mittlere Leistung von 1 kW. Für die Zeiten $t_{ein}$, in denen der Widerstand $R_{R3}$ an Spannung liegt, werden beide Zweige 6 und 7 durch Öffnen der zugehörigen Schalter spannungslos geschaltet. Während der Zeiten $t_{aus}$, in denen der Widerstand $R_{R3}$ nicht an Spannung liegt, liegen beide Widerstände $R_{R1}$ und $R_{R2}$ hingegen an Spannung. Bei dem angegebenen Tastverhältnis entstehen in $R_{R1}$ und $R_{R2}$ Mittelwerte von 1500 W bzw. 750 W. Somit werden die Leistungen von 4 kW einerseits und 3 kW andererseits entgegengesetzt geschaltet. Damit resultieren nun zwar in den einzelnen Zweigen 6, 7 und 8 erhebliche Leistungssprünge, nicht aber in den Außenleitern $L_1$ und $L_2$, da hier nur die Überlagerungen zum Tragen kommen.

Die Gesamtleistung, die sich hier auswirkt, beträgt 3 kW konstant, worüber sich Leistungsimpulse von 1 kW mit einem Tastverhältnis von 1/4 überlagern, so daß sich eine mittlere Leistung von $P_R$ = 3250 W ergibt.

Um eine Leistung $P_R$ = 3500 W darzustellen, wird analog verfahren, wobei das Tastverhältnis auf 1/2 festgelegt wird und $t_{ein}$ = $t_{aus}$ wird. Damit stellt sich in den Außenleitern eine konstante Leistung von 3 kW überlagert von einer getakteten Leistung von 1 kW mit einem Mittelwert von $P_R$ = 3500 W dar. Allgemein gilt für diesen Bereich

$$(9) \quad P_R = 3 \cdot P_{R1} + P_{R1} \cdot \frac{t_{ein}}{t_{ein} + t_{aus}}$$

Im Bereich zwischen 4 und 5 kW wird der Widerstand $R_{R3}$ permanent an Spannung gelegt, der Widerstand $R_{R1}$ gemäß der obersten Diagrammgruppe getastet und der Widerstand $R_{R2}$ bleibt ausgeschaltet. Allgemein gilt für den Mittelwert der darstellbaren Leistung in diesem Bereich

$$(10) \quad P_R = 4 \cdot P_{R1} + P_{R1} \cdot \frac{t_{ein}}{t_{ein} + t_{aus}}$$

Zur Darstellung von Leistungen im Bereich zwischen 5 kW und 6 kW ist der Widerstand $R_{R3}$ permanent eingeschaltet, während die Widerstände $R_{R2}$ und $R_{R1}$ getastet werden.

Die Tastung erfolgt hierbei analog zu der im Leistungsbereich zwischen 1 und 2 kW. Als Beispiel ist die Darstellung der Leistung von $P_R$ = 5750 W gewählt, wobei periodisch für eine Einschaltdauer $t_{ein}$ = 60 ms der Widerstand $R_{R2}$ an Spannung gelegt wird und für eine Zeit $t_{aus}$ = 20 ms abgeschaltet wird, so daß sich bei diesem Tastverhältnis von 3/4 eine mittlere Leistung an $R_{R2}$ von 1500 W ergibt.

Für die Zeiten $t_{ein}$ wird der Widerstand $R_{R1}$ abgeschaltet. Somit ergibt sich am Widerstand $R_{R1}$ eine mittlere Leistung von 250 W. Die Überlagerung der Leistungen ergibt den gewünschten Mittelwert von 5750 W. Allgemein gilt für diesen Bereich

$$(11) \quad P_R = 5 \cdot P_{R1} + P_{R1} \cdot \frac{t_{ein}}{t_{ein} + t_{aus}}$$

Im Bereich von 6 kW bis 7 kW werden die Widerstände $R_{R3}$ und $R_{R2}$ fest zugeschaltet und der Widerstand $R_{R1}$ wird entsprechend der oberen Diagrammgruppe getastet, wobei für die darstellbare Leistung gilt

EP 0 201 573 B1

$$(12) \quad P_R = 6 \cdot P_{R1} + P_{R1} \cdot \frac{t_{ein}}{t_{ein} + t_{aus}}$$

Aus Vorstehendem zeigt sich, daß es für die Erfindung generell wichtig ist, daß in einem ersten Leistungsbereich ein einziger Widerstand schwingungspaketgesteuert getastet wird, in einem weiteren mittleren Leistungsbereich zwei Widerstände schwingungspaketgesteuert getastet werden, wobei jeweils ein Widerstand an Spannung liegt und der andere ausgeschaltet ist. In weiteren Leistungsbereichen sind ein oder mehrere Widerstände permanent an Spannung, während ein oder mehrere Widerstände gemäß der Erfindung getastet werden. Die Maximalleistung des Systems nach Figur 3 ist 7 kW. Auf diese Weise ist im gesamten Leistungsbereich von 0 bis 7 kW die Leistung in Stufen von 250 einstellbar, wobei neben Dauereinschaltung nur die angegebenen diskreten Tastverhältnisse $t_{ein}$ zu $t_{ein}$ + $t_{aus}$ von 1/4, 1/2 und 3/4 zur Anwendung kommen.

Da die Gesamtleistung in allen Fällen nur Sprünge von maximal $P_{R1}$ = 1 kW aufweist, treten in den Außenleitern nur Rückwirkungen entsprechend der Größe dieser Sprünge auf.

Das entscheidende ist, daß beim Tasten eines größeren Teilwiderstandes alle kleineren zusammen entgegengesetzt getastet werden. Das bedeutet, daß beim Ausführungsbeispiel der Figur 3 beim Schalten des Widerstandes $R_{R3}$ die beiden Widerstände $R_{R1}$ und $R_{R2}$ gemeinsam und entgegengesetzt zu $R_{R3}$ geschaltet werden. Wird $R_{R3}$ demgemäß eingeschaltet für eine bestimmte Zeit, so werden die Widerstände $R_{R1}$ und $R_{R2}$ für exakt diese Zeit gemeinsam ausgeschaltet und umgekehrt. Wird weiterhin $R_{R2}$ für eine bestimmte Zeit eingeschaltet, so wird der Widerstand $R_{R1}$ abgeschaltet und umgekehrt, wobei hierbei der Widerstand $R_{R3}$ entweder permanent an Spannung liegt oder permanent abgeschaltet ist.

Für den Fall, daß noch mehr Zweigwiderstände an den Leitern $L_1$ und $L_2$ oder $L_1$ und $N$ liegen, würden die selben Erwägungen gelten.

Das Ausführungsbeispiel gemäß Figur 3 erfüllt mit den angegebenen Leistungen, Widerständen und Tastverhältnissen die Bestimmungen über zulässige Netzrückwirkungen. Die auftretenden Flickerpegel liegen deutlich unter den zugelassenen Werten.

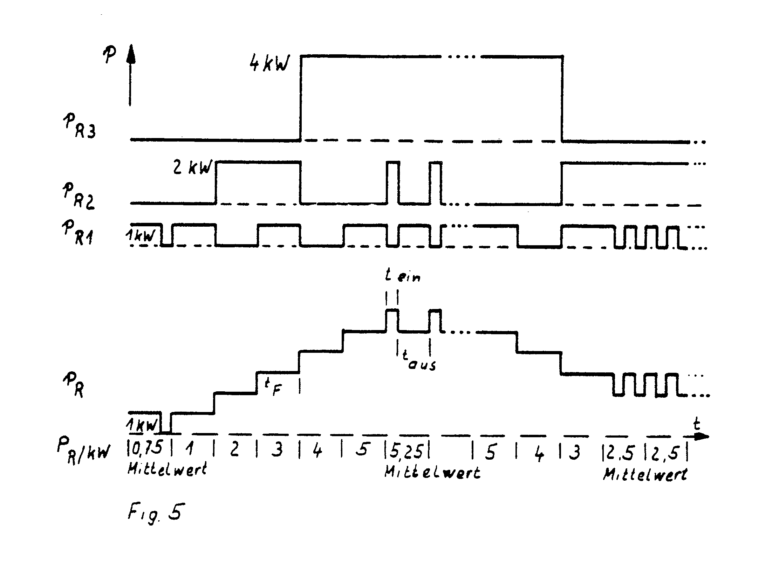

Während bislang der stationäre Fall behandelt wurde, d. h. eine bestimmte Leistung angewählt werden soll, ist es bei Steuerungen bzw. Regelungen notwendig, daß bestimmte Leistungen als Stellgrößen sich ändern bzw. variabel vorgegeben werden müssen. Anhand der Figur 5 wird erklärt, wie Leistungsänderungen bei der Schaltung nach Figur 3 vorgenommen werden. Bei Einstellvorgängen innerhalb eines Bereiches von 1 kW wird nur das Tastverhältnis entsprechend verändert. Bei größeren Einstellvorgängen wird in Schritten von 1 kW zu- oder abgeschaltet, wobei bei der Aufteilung der Widerstände im Dualsystem dies beispielsweise auch durch Zuschalten oder Abschalten eines größeren Teilwiderstandes und gleichzeitiges Ab- oder Zuschalten aller kleineren Teilwiderstände erreicht wird. Während der Einstellvorgänge erfolgt keine Tastung. Liegt die bestehende Leistung $P_R$ als Tastung vor, so wird zunächst der obere Wert bzw. der untere Wert der Tastung eingestellt und von da aus in 1 kW-Schritten erhöht bzw. erniedrigt.

Muß die gewünschte Leistung $P_R$ als Tastung dargestellt werden, so erfolgt eine Erhöhung bzw. eine Erniedrigung in 1 kW-Schritten bis zum unteren bzw. oberen Wert der Tastung, wonach die entsprechende Tastung angeschlossen wird.

Im Beispiel der Figur 5 sind zwei Einstellvorgänge gezeigt. Der Ausgangspunkt für den ersten Einstellvorgang ist eine Leistung von 0,75 kW, die durch Tastung des Widerstandes $R_{R1}$ als Mittelwert dargestellt ist. Von diesem Ausgangswert soll möglichst schnell eine Leistung von $P_R$ = 5,25 kW erreicht werden. Dazu wird zunächst 1 kW durch Schließen von $V_{R1}$ eingestellt und dann durch Einschalten von $R_{R2}$ und gleichzeitiges Ausschalten von $R_{R1}$ eine Leistung von 2 kW erreicht. Analog wird in 1 kW-Schritten bis zur Leistung von $P_R$ = 5 kW erhöht, wonach sich eine Tastung von $R_{R2}$ und gleichzeitig eine entgegengesetzte Tastung von $R_{R1}$ entsprechend den vorangegangenen Ausführungen anschließt und damit 5,25 kW als Mittelwert vorliegt.

Der zweite gezeigte Einstellvorgang erfolgt im Anschluß an den ersten von $P_R$ = 5,25 kW auf $P_R$ = 2,5 kW.

Dazu wird zunächst ohne Tastung 5 kW eingestellt und in 1 kW-Schritten bis 3 kW erniedrigt, wonach eine Tastung von $R_{R1}$ angeschlossen wird, wodurch die gewünschte Leistung von 2,5 kW erreicht wird. Der zeitliche Abstand zwischen zwei 1 kW-Schritten wird zu $t_F$ = 80 ms gewählt, so daß die Einstellgeschwindigkeit 1 kW pro 80 ms beträgt. Wesentlich ist bei dem Verfahren die Zu- und Abschaltung in Schritten der Größe von $P_{R1}$, welches durch Zu- und Abschalten der dualgestuften Teilwiderstände erreicht wird. Beim Betrieb der Schaltung von Figur 3 an einem 380 V-Netz erreicht die Schaltung bei periodischem Zuschalten über den gesamten Bereich von 0 bis 7 kW und Abschalten über den gesamten Bereich von 7 kW bis 0 in der angegebenen Weise gerade die zulässigen Netzrückwirkungen (Flickerpegel).

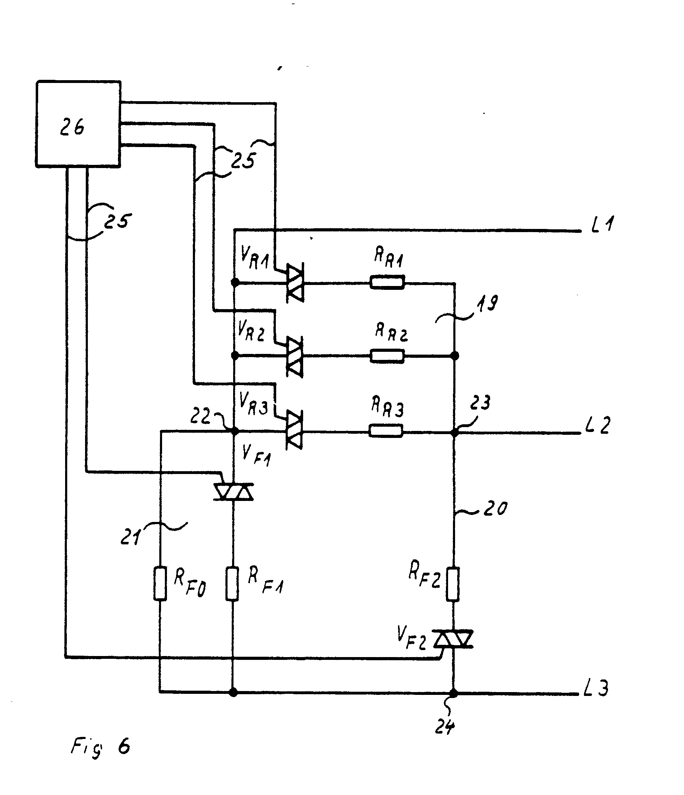

Beim Ausführungsbeispiel gemäß Figur 6 handelt es sich um die Anwendung der Erfindung auf ein Dreiphasensystem mit Außenleitern $L_1$, $L_2$ und $L_3$, zwischen denen jeweils Stränge 19, 20 und 21 gebildet werden, wobei der Strang 19 eine Leistungsstufe bildet, die feingestuft ist, da sie aus drei Teilwiderständen $R_{R1}$, $R_{R2}$ und $R_{R3}$ besteht, die jeweils mit ihren zugehörigen Schaltern $V_{R1}$, $V_{R2}$ und $V_{R3}$ in Serie liegen. Die drei Widerstände liegen zueinander parallel. Der zweite Strang 20 stellt eine ungestufte Leistungsstufe dar, die aus einem einzelnen Widerstand $R_{F2}$ mit zugehörigem Schalter $V_{F2}$ in Serie liegt. Der dritte Strang 21 stellt eine grobgestufte Leistungsstufe dar, die aus zwei parallel liegenden Widerständen $R_{F0}$ und $R_{F1}$ besteht, wobei lediglich der Widerstand $R_{F1}$ mit dem zugehörigen Schalter $V_{F1}$ in Serie liegt. Alle Schaltelemente der Leistungsstufen 19 und 21 sind im Punkt 22 galvanisch verbunden. Die maximalen Strangleistungen sind alle gleich.

Sie betragen beispielsweise 7 kW. Damit ist an dem Widerstand $R_{R1}$ maximal eine Leistung von 1 kW, am Widerstand $R_{R2}$ eine solche von 2 kW und am Widerstand $R_{R3}$ eine Leistung von 4 kW erzeugbar. Am Widerstand $R_{F0}$ ist eine Leistung von 4 kW erzeugbar, am Widerstand $R_{F1}$ eine solche von 3 kW. Die am Widerstand $R_{F2}$ erzeugbare Leistung beträgt 7 kW. Alternativ wäre es auch möglich, in der grobgestuften Leistungsstufe die Widerstände gleich zu wählen, so daß hier beispielsweise zwei gleiche Leistungen von je 3,5 kW erzeugbar wären. Ebenso wäre es möglich, anstelle der ungestuften Leistungsstufe 20 eine grobgestufte, bestehend aus zwei parallelen Teilwiderständen anzuwenden, die ihrerseits gleich oder ungleich sein können.

Bevorzugt wird die Schaltung gemäß Figur 6 als Leistungsstellglied für einen Durchlauferhitzer, dessen Brauchwasserauslauftemperatur elektronisch geregelt ist, benutzt.

Die Schalter für die Teilwiderstände $R_{R1}$, $R_{R2}$ und $R_{R3}$ und $R_{F1}$, also die Schaltelemente für die feingestufte Leistungsstufe und die grobgestufte Leistungsstufe, liegen unmittelbar an dem gemeinsamen Bezugspunkt 22.

Die Anbindung der drei unterschiedlichen Leistungsstufen an die Außenleiter $L_1$ bis $L_3$ wird wie folgt vorgenommen, da sich damit die Netzrückwirkungen bei den später erläuterten Feststufenzustandsänderungen minimieren: Der Verbindungspunkt 22 der feingestuften Leistungsstufe 19 und der grobgestuften Leistungsstufe 21 liegt am Außenleiter $L_1$. Der Verbindungspunkt 23 zwischen der feinstgestuften Leistungsstufe 19 und der ungestuften Leistungsstufe 20 liegt am Außenleiter $L_2$ und der Verbindungspunkt 24 zwischen der grobgestuften Leistungsstufe 21 und der ungestuften Leistungsstufe 20 liegt am Außenleiter $L_3$, wobei in den Phasenwinkeln die Spannungen der Außenleiter $L_1$, $L_2$ und $L_3$ zyklisch einander folgen. Demgemäß können die Anbindungspunkte 22, 23 und 24 auch zyklisch bezüglich der Außenleiter vertauscht werden.

Die Steuerelektroden aller Triacs sind über Leitungen 25 mit einer Steuerung 26 verbunden, wobei gilt, daß die Triacs $V_{R1}$, $V_{R2}$ und $V_{R3}$ sowohl schwingungspaketgesteuert sein können wie auch ein- und ausgeschaltet werden können, während die Triacs $V_{F1}$ und $V_{F2}$ nur ein- oder ausgeschaltet werden können.

Die maximal mögliche Gesamtleistung $P_{gesmax}$ der Anordnung beträgt 21 kW und ist bei Vollast symmetrisch auf die Stränge zwischen den Außenleitern $L_1$ und $L_2$ sowie den Außenleitern $L_1$ und $L_3$ und den Außenleitern $L_2$ und $L_3$ verteilt. Die Grundleistung $P_{F0}$ = 4 kW ist bei eingeschaltetem Gerät immer eingeschaltet. Die Gesamtleistung $P_{ges}$ ist zwischen 4 kW und 21 kW in Stufen von 250 W einstellbar (vergleiche Erläuterungen zu Figur 4). Die Anordnung des Stranges 19 zwischen den Außenleitern $L_1$ und $L_2$ entspricht der Anordnung der Figur 3. Die Widerstände $R_{R1}$, $R_{R2}$ und $R_{R3}$ werden zur Darstellung einer bestimmten Leistung $P_R$, wie in Figur 4 angegeben, fest zu- oder abgeschaltet oder schwingungspaketgesteuert betrieben.

Leistungsänderungen im Strang 19 werden entsprechend Figur 5 vorgenommen. Die Widerstände $R_{F1}$ und $R_{F2}$ werden fest zu- oder abgeschaltet und nicht mit Schwingungspaketsteuerung betrieben.

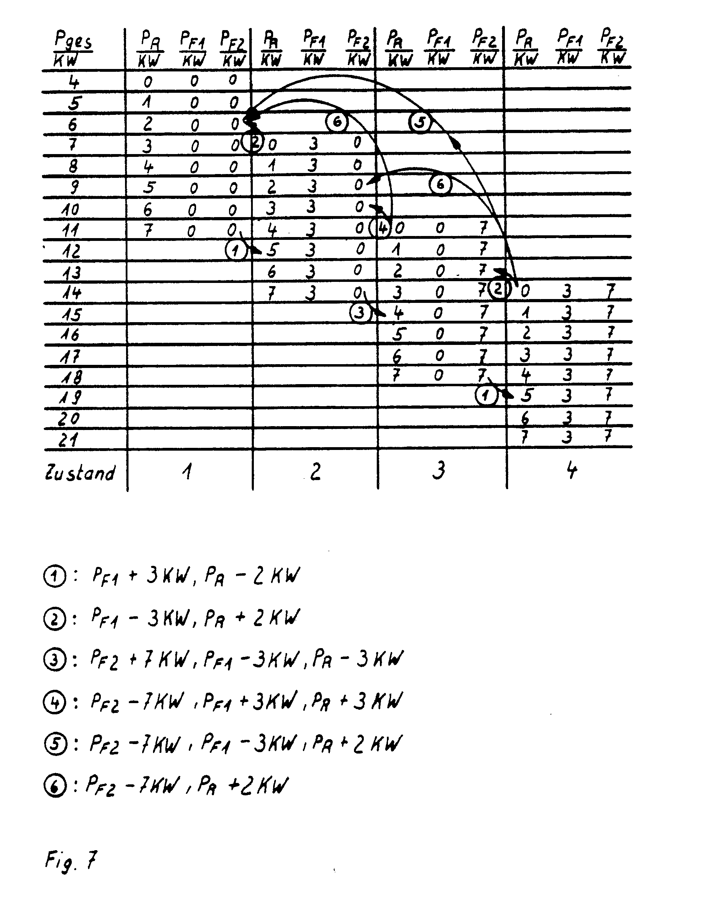

Figur 7 zeigt die möglichen Leistungseinstellungen der Schaltung nach Figur 6 ohne Anwendung von Schwingungspaketsteuerung. In Abhängigkeit von den fest zu- oder abgeschalteten Teilwiderständen $R_{F1}$ bzw. $R_{F3}$ existieren vier Feststufenzustände, im Folgenden als Zustände bezeichnet (z. B. Zustand 2: $P_{F1}$ fest eingeschaltet, $P_{F2}$ fest ausgeschaltet). In jedem Zustand kann die Gesamtleistung durch Zuschalten, Abschalten bzw. Tasten von $R_{R1}$, $R_{R2}$ und $R_{R3}$ entsprechend Figur 4 in einem Bereich von 7 kW verändert werden. Damit ist im Zustand 1 eine Gesamtleistung von 4 - 11 kW, im Zustand 2 eine Gesamtleistung von 7 - 14 kW, im Zustand 3 eine Gesamtleistung von 11 - 18 kW und im Zustand 4 eine Gesamtleistung von 14 - 21 kW darstellbar.

Die durch Anwendung von Schwingungspaketsteuerung in den Widerständen $R_{R1}$, $R_{R2}$ und $R_{R3}$ entstehenden Zwischenwerte der Gesamtleistung (z. B. 17,25 kW) sind in der Figur 7 nicht mehr eingetragen.

Wie aus der Figur 7 ersichtlich, ist jede Leistung, ausgenommen die Leistungen von 0 - 6 kW und oberhalb 18 kW, durch mehrere unterschiedliche Schalterstellungen in den einzelnen Strängen darstellbar. Hierbei entstehen wenigstens zwei, mitunter auch drei gleichwertige Leistungsstufen.

Beim Verändern der Gesamtleistung $P_{ges}$ wird soweit wie möglich die Leistung $P_R$ der feingestuften Leistungsstufe verändert, d. h. es wird soweit wie möglich in einem bestehenden Zustand verblieben.

Ist eine gewünschte Leistung im bestehenden Zustand nicht darstellbar, so erfolgt eine Zustandsumschaltung. Die vorgesehenen Zustandsumschaltungen oder Übergänge sind in Figur 7 als eingekreiste Ziffern definiert. Beispielsweise erfolgt eine Leistungsänderung von $P_{ges}$ = 12 kW im Zustand 2 auf $P_{ges}$ = 17 kW dergestalt, daß zunächst im Zustand 2 analog zu Figur 5 in der feingestuften Leistungsstufe in 1 kW-Schritten mit einer Einstellgeschwindigkeit von 1 kW pro 80 ms bis auf 7 kW erhöht wird (Gesamtleistung 14 kW). Dann folgt wieder im Abstand von 80 ms die Zustandsumschaltung, eingekreist 3, wobei gleichzeitig die Teilwiderstände $R_{F2}$ zugeschaltet, $R_{F1}$ abgeschaltet und zusätzlich $P_R$ um 3 kW reduziert wird, was einer Gesamtleistungserhöhung von 1 kW entspricht.

Danach wird wieder im Abstand von 80 ms im Zustand 3 in Schritten von 1 kW mit einer Einstellgeschwindigkeit von 1 kW pro 80 ms eine stufenweise Erhöhung von $P_R$ bis zur gewünschten Gesamtleistung von $P_{ges}$ = 17 kW vorgenommen.

Für das Hochschalten der Leistung zwischen 4 und 21 kW ergeben sich somit drei festgelegte Zustandsänderungen bei 11, 14 und 18 kW, wobei die Zustandsänderungen bei 11 und 18 kW identisch sind.

Beim entsprechendem Herunterfahren der Leistung von 21 auf 4 kW ergeben sich Zustandsänderungen bei den Leistungsstufen 14, 11 und 7 kW, wobei die Zustandsänderungen bei 14 und 7 kW gleich sind.

Wesentlich ist, daß bei den Zustandsänderungen, eingekreist 1 bis eingekreist 4, gleichzeitiges Zu- und Abschalten von Teilwiderständen in mehreren unterschiedlichen Strängen vorgenommen wird, wobei die Zustandsänderungen so ausgelegt sind, daß bei der in Figur 6 angegebenen oder einer zyklisch vertauschten Anschlußfolge eine Minimierung der Netzrückwirkungen (Flicker) erreicht wird.

Um bei der Anwendung der Schaltung nach Figur 6 als Leistungsstellglied für einen elektrischen Durchlauferhitzer Überhitzungen des Durchlauferhitzers zu vermeiden, sind die beiden Übergänge, eingekreist 5 und eingekreist 6, vorgesehen, die die Gesamtleistung sprunghaft deutlich verringern. Auch bei diesen Übergängen werden entgegengesetzte Schaltungen in der feingestuften Leistungsstufe 19 vorgenommen, um die Netzrückwirkungen (Flicker) zu verringern. Beispielsweise würde das alleinige Abschalten von $R_{F2}$ zu hohen Rückwirkungen in den Außenleitern $L_2$ und $L_3$ führen. Beim ausgeführten Übergang, eingekreist 6, mit der gleichzeitigen, entgegengesetzten Schaltung von 2 kW in der feingestuften Leistungsstufe 19, treten zwar in allen Außenleitern $L_1$, $L_2$ und $L_3$, insgesamt aber geringere Rückwirkungen auf. Da die Zustandsänderung, eingekreist 6, durch das Abschalten von $R_{F2}$ und das gleichzeitige Erhöhen von $P_R$ um 2 kW definiert ist, ist der Übergang, eingekreist 6, von allen Ausgangspunkten der Zustände 3 und 4 aus durchführbar, die ein Erhöhen der Leistung von $P_R$ um 2 kW gestatten, wobei die grobgestufte Leistungsstufe unverändert bleibt.

Ein noch drastischeres Reduzieren der Gesamtleistung findet durch gleichzeitiges Abschalten von $R_{F2}$ und $R_{F1}$ statt. Diese gleichzeitigen Abschaltungen haben wiederum große Netzrückwirkungen in den drei Außenleitern $L_1$, $L_2$ und $L_3$ zur Folge. Beim vorgesehenen Übergang, eingekreist 5, wird durch das gleichzeitige Erhöhen der Leistung $P_R$ um 2 kW eine Reduzierung dieser Netzrückwirkungen erreicht.

Neben der Ausführung des Überganges an der in der Figur 7 gezeigten Stelle ist auch eine Ausführung dieses Überganges von allen anderen Ausgangsleistungen des Zustandes 4 unterhalb 19 kW möglich. Die angegebenen Übergänge, eingekreist 1 bis eingekreist 6, werden durch einen programmierten Mikrocomputer der Steuerung 26 in Figur 6 ausgeführt.

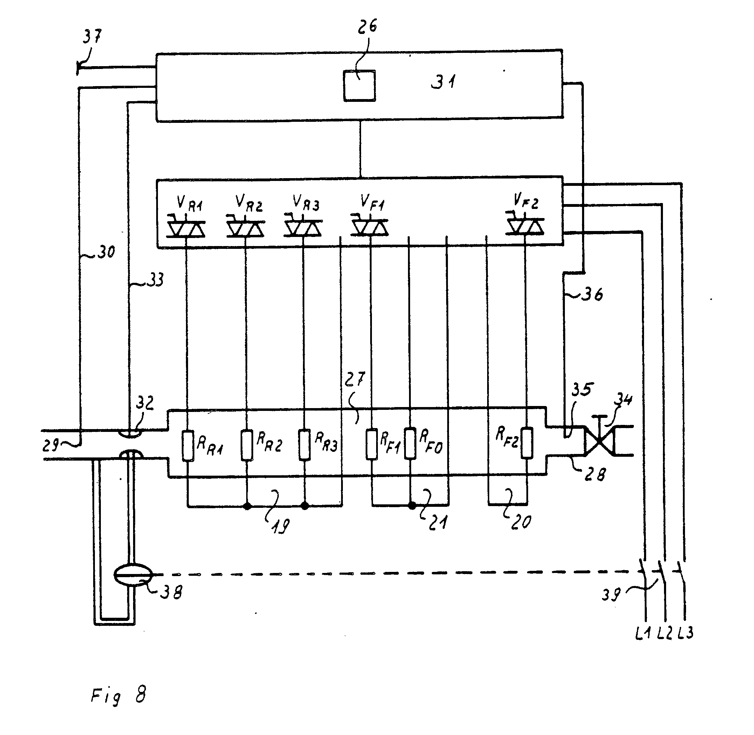

In der Figur 8 ist ein elektrischer Durchlauferhitzer dargestellt. Dieser Durchlauferhitzer besteht aus einem Kanalkörper 27, der von einer Zapfwasserleitung 28 durchsetzt ist. Diese Zapfwasserleitung weist wassernetzseitig einen Temperaturfühler 29 auf, der über eine Meßleitung 30 mit einem Regler 31 verbunden ist. Weiterhin ist in der Kaltwassereinlaufleitung ein Wasserdurchsatzgeber 32 angeordnet, der über eine Meßleitung 33 gleichfalls mit dem Regler verbunden ist.

Der Kanalkörper 27 ist von Widerständen $R_{R1}$, $R_{R2}$, $R_{R3}$, $R_{F1}$, $R_{F0}$ und $R_{F2}$ durchsetzt, die in drei Stufen 19, 20 und 21 unterteilt sind, die alle an die Außenleiter eines speisenden Drehstromnetzes angeschlossen sind. Die sich durch die Stufen 19, 20 und 21 ergebenden Leistungen sind gleich groß, die Leistungsstufe 20 besteht aus einem ungestuften Einzelwiderstand $R_{F2}$, der über einen Triac $V_{F2}$ an den Außenleitern liegt, die Leistungsstufe 21 als grobgestufte Leistungsstufe besteht aus zwei parallelliegenden Widerständen $R_{F0}$ und $R_{F1}$, die fast gleich groß sind und von denen der größere Widerstand $R_{F0}$ galvanisch an die Außenleiter angeschlossen ist, während der kleinere Widerstand $R_{F1}$ über einen zugehörigen Triac $V_{F1}$ an den Außenleitern liegt. Die Stufe 19 bildet die feingestufte Leistungsstufe, sie besteht aus drei einzelnen

EP 0 201 573 B1

Widerständen $R_{R1}$, $R_{R2}$ und $R_{R3}$, die parallel geschaltet sind und mit je einem Triac $V_{R1}$, $V_{R2}$ und $V_{R3}$ in Reihe liegen. Die einzelnen Stufen können auf Kanäle aufgeteilt sein, die strömungstechnisch parallel oder in Serie oder auch parallel und in Serie liegen können.

Stromab des Kanalkörpers setzt sich die Zapfwasserleitung 28 fort, sie führt zu einem oder mehreren Zapfventilen 34 und weist einen Temperaturfühler 35 auf, der über eine Leitung 36 gleichermaßen mit dem Regler 31 verbunden ist, der einen Sollwertgeber 37 aufweist, an dem beliebige Wassertemperaturen vorgewählt werden können.

Wesentlich an dem Regler 31 ist, daß er wenigstens einen Mikrocomputer und die Steuerung 26 aufweist, in denen nach Maßgabe der Wassereinlaßtemperatur, gemessen über den Fühler 29, und dem Wasserdurchsatz, gemessen durch den Fühler 32, und der Wasserauslaßtemperatur, gemessen durch den Fühler 35, eine solche Leistung beziehungsweise Leistungsvariation vorgewählt wird, um ein optimales Regelungsergebnis bezüglich der Temperatur des auslaufenden Wassers unter gleichzeitiger Minimierung der Netzrückwirkungen zu erzielen.

Ändert sich der Zapfwasserstrom durch Öffnen oder Schließen des Zapfventils oder Zu- oder Abschalten weiterer Zapfventile, so wird die Variation des Wasserdurchsatzes unmittelbar über den Fühler 32 erfaßt, was zur Leistungsänderung im Zuge der Leistungsstufen 19, 20 und 21 führt.

Wesentlich ist noch, daß der Wasserdurchsatzgeber 32 einen Membranschalter 38 betätigt, der seinerseits einen dreipoligen Außenleiterschalter 39 betätigt, mit dem überhaupt die Spannungsversorgung des Durchlauferhitzers durchgeführt wird.

Für die Wirkungsweise des Durchlauferhitzers bzw. für das an Spannung legen bzw. von der Spannung abschalten der Teilwiderstände der Leistungsstufen 19 bis 21 gilt das zum Ausführungsbeispiel der Figur 6 Gesagte.

Wesentlich für das Ausführungsbeispiel der Figur 8 ist aber, daß das erfindungsgemäße Leistungsstellglied nunmehr in einem Regelkreis liegt.

Es wäre analog möglich, die Regelung aufzugeben, indem der Fühler 35 weggelassen wird und in Abhängigkeit vom Wasserdurchsatz und der Wassereinlaßtemperatur eine Leistungssteuerung vorzunehmen.

In die Steuerung könnte man auch die Höhe der Netzspannung einbeziehen.

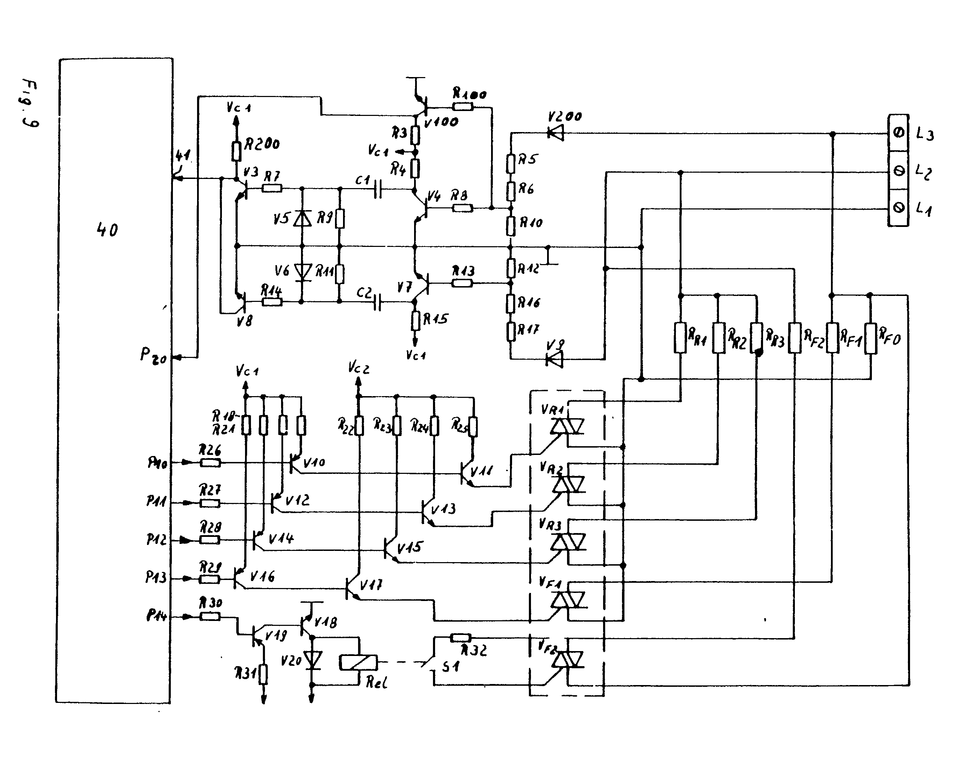

In Figur 9 ist eine praktische Ausführung der Schaltung des Leistungsstellgliedes für einen elektrischen Durchlauferhitzer entsprechend Figur 6 angegeben.

Die Schaltung ist an die Außenleiter $L_1$, $L_2$ und $L_3$ eines 380 V-Drehstromsystems angeschlossen. Die Gesamtleistung des Verbrauchers ist in Teilleistungen aufgeteilt, die durch die Verbraucherwiderstände $R_{R1}$, $R_{R2}$, $R_{R3}$ $R_{F0}$, $R_{F1}$ und $R_{F2}$ erzeugt werden. Die Verbraucherwiderstände entsprechen denen der Figur 6.

Die durch die Verbraucherwiderstände darstellbaren Leistungen sowie das Steuerverfahren zur Einstellung und Veränderung der Leistung gehen aus den Ausführungen zu Figur 6 und Figur 7 hervor.

Die Gesamtleistung des Durchlauferhitzers beträgt 21 kW.

Der Verbraucherwiderstand $R_{F0}$ ist bei eingeschaltetem Gerät immer zugeschaltet. Die Verbraucherwiderstände $R_{R1}$, $R_{R2}$ und $R_{R3}$ werden durch elektronische Schaltelemente (Triacs) $V_{R1}$, $V_{R2}$ und $V_{R3}$ zu- oder abgeschaltet bzw. getastet. Die Verbraucherwiderstände $R_{F1}$ und $R_{F2}$ werden durch elektronische Schaltelemente (Triacs) $V_{F1}$ und $V_{F2}$ zu- oder abgeschaltet.

Die Ansteuerung der Triacs erfolgt über zweistufige Treiberschaltungen, die aus Ausgängen eines Single-Chip-Mikrocomputers 40 gesteuert werden. Zur Durchschaltung des Triacs $V_{R1}$ wird der Ausgang $P_{10}$ logisch 0 gesetzt, wodurch der Transistor $V_{10}$ und damit auch der Transistor $V_{11}$ leitend und damit eine positive Spannung an das Gate von $V_{R1}$ gelegt wird. Zum Sperren von $V_{R1}$ wird $P_{10}$ logisch 1 gesetzt.

Die Ansteuerung der Triacs $V_{R2}$, $V_{R3}$ und $V_{F1}$ erfolgt analog. Die Triacs $V_{R1}$, $V_{R2}$, $V_{R3}$ und $V_{F1}$ haben mit $L_1$ einen gemeinsamen Bezugspunkt.

Zum Durchschalten des Triacs $V_{F2}$ wird der Ausgang $P_{14}$ logisch 0 gesetzt. Damit wird über die Transistoren $V_{19}$ und $V_{18}$ ein Anziehen des Relais Rel bewirkt, womit über den Schließer $S_1$ und den Widerstand $R_{32}$ der Triac leitend wird. Zum Sperren des Triacs $V_{F2}$ wird $P_{14}$ logisch 1 gesetzt. Der Triac $V_{F2}$ hat mit $L_3$ einen anderen Bezugspunkt als die Triacs $V_{R1}$, $V_{R2}$, $V_{R3}$ und $V_{F1}$. Die Versorgung der Treiberschaltungen erfolgt über zwei Gleichspannungen $V_{C1}$ und $V_{C2}$.

Das Zu- oder Abschalten der Spannungen an den Verbraucherwiderständen erfolgt durch Öffnen oder Sperren der Triacs im Nulldurchgang der Spannung am betreffenden Triac.

Dazu ist eine Erkennung der Nulldurchgänge der Spannungen zwischen $L_2$ und $L_1$ und zwischen $L_3$ und $L_1$ vorhanden. Der Nulldurchgang der Spannung zwischen $L_2$ und $L_3$ wird vom Mikrocomputer rechnerisch daraus abgeleitet. Zur Erkennung des Nulldurchganges der Spannung zwischen $L_3$ und $L_1$ wird über eine Diode $V_{200}$ die positive Halbwelle einem Spannungsteiler $R_5$, $R_6$ und $R_{10}$ zugeführt. Oberhalb einer bestimmten Schwellspannung an $R_{10}$ wird der Transistor $V_4$ durchgeschaltet. Fällt die Spannung an

12

$R_{10}$ unter eine bestimmte Schwelle, sperrt $V_4$. Damit wird über den Kondensator $C_1$ und den Widerstand $R_3$ der Transistor $V_3$ impulsmäßig durchgeschaltet und am Interrupt-Eingang 41 des Mikrocomputers ein Interrupt-Signal (0-Pegel) erzeugt.

Auf diese Weise werden alle negativen Nulldurchgänge der Spannung zwischen $L_3$ und $L_1$ erkannt und lösen Interrupt-Signale aus. Analog dazu erfolgt die Erkennung aller negativen Nulldurchgänge der Spannung zwischen $L_2$ und $L_1$ mit einer identischen Schaltung, wobei in gleicher Weise Interrupt-Signale ausgelöst werden.

Zur Unterscheidung, ob ein Nulldurchgang der Spannung zwischen $L_2$ und $L_1$ oder zwischen $L_3$ und $L_1$ den Interrupt ausgelöst hat, wird der statische Pegel am Spannungsteiler $R_{10}$ über den Transistor $V_{100}$ an einen Eingang $P_{20}$ des Mikrocomputers geführt und dort ausgewertet. Ist nach Auslösen eines Interrupt-Signals der Pegel an $P_{20}$ logisch 0, so liegt ein Nulldurchgang der Spannung zwischen $L_2$ und $L_1$ vor. Ist nach Auslösen eines Interrupt-Signals der Pegel an $P_{20}$ logisch 1, so liegt ein Nulldurchgang der Spannung zwischen $L_3$ und $L_1$ vor. Die Schaltung zur Erkennung der Spannungsnulldurchgänge wird von der Gleichspannung $V_{C1}$ gespeist.

Durch Analyse der Nulldurchgänge im Mikrocomputer wird festgestellt, ob die Strangwiderstände in der richtigen Weise mit den Außenleitern verbunden sind. Bei falschem Anschluß erfolgt keine Freigabe der Triacs. Die Einstellung einer vorgegebenen Leistung durch Ein- oder Abschaltung bzw. Tastung der Verbraucherwiderstände im jeweiligen Spannungsnulldurchgang erfolgt durch ein im Single-Chip-Mikrocomputer gespeichertes Programm.

Der Mikrocomputer mit der Ansteuerelektronik für die Schaltelemente entspricht der Steuereinrichtung 26 in Figur 6.

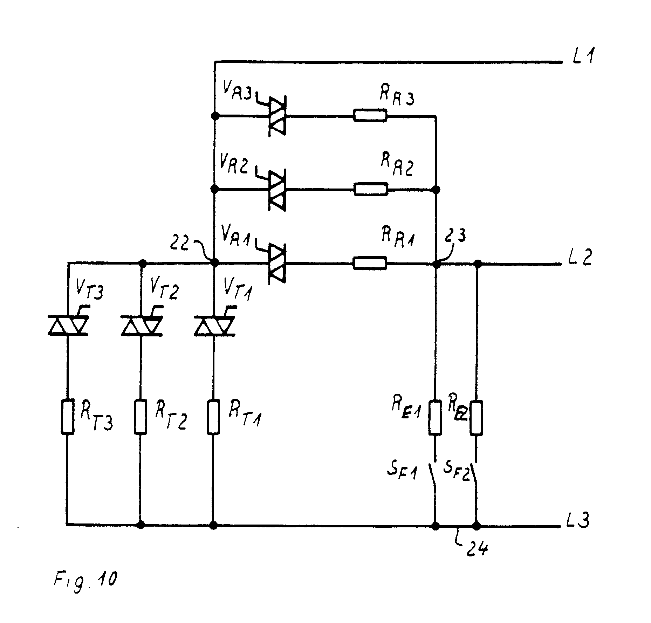

Figur 10 zeigt ein weiteres Ausführungsbeispiel der Erfindung, wobei eine größere Leistung an einem Dreiphasensystem betrieben wird. Dabei wird eine Schaltungsanordnung entsprechend der Figur 3, bestehend aus Teilwiderständen $R_{R1}$, $R_{R2}$ und $R_{R3}$ mit den entsprechenden Schaltelementen $V_{R1}$, $V_{R2}$ und $V_{R3}$ zwischen den beiden Verbindungspunkten 22 und 23 betrieben. Eine identische Schaltungsanordnung, bestehend aus den Teilwiderständen $R_{T1}$, $R_{T2}$ und $R_{T3}$, verbunden mit den entsprechenden Schaltelementen $V_{T1}$, $V_{T2}$ und $V_{T3}$, wird zwischen den Anschlußpunkten 22 und 24 betrieben, wobei die Widerstände $R_{T1} = R_{R1}$, $R_{T2} = R_{R2}$ und $R_{T3} = R_{R3}$ sind. Alle Schaltelemente $V_{R1}$, $V_{R2}$, $V_{R3}$, $V_{T1}$, $V_{T2}$ und $V_{T3}$ weisen mit 22 einen gemeinsamen Bezugspunkt auf.

Zwischen den Verbindungspunkten 23 und 24 wird eine weitere Schaltungsanordnung betrieben, die entweder identisch zu den bereits angegebenen Schaltungsanordnungen ist oder abweichend davon eine andere bzw. gröbere Stufung aufweist. Die Teilwiderstände $R_{E1}$, und $R_{E2}$ der Anordnung zwischen 23 und 24 weisen Schaltelemente (Kontakte bzw. Triacs) $S_{F1}$ und $S_{F2}$ auf, die keinen gemeinsamen Bezugspunkt zu den übrigen Schaltungselementen aufweisen. Die Verbindungspunkte 22, 23 und 24 sind mit den Außenleitern eines Dreiphasensystems verbunden, wobei die Anschlußfolge ohne Bedeutung ist. Die Schaltung ermöglicht eine feingestufte Einstellung der Gesamtleistung $P_{ges}$ sowie eine schnelle Einstellung einer gewünschten Leistung unter Einhaltung der zulässigen Netzrückwirkungen unabhängig von der gewählten Belegung der Außenleiteranschlüsse, wobei die Belastung des Netzes bei allen möglichen Teilleistungen angenähert symmetrisch gehalten werden kann. Die Ansteuerung der Schaltelemente erfolgt über eine Steuerung analog wie in Figur 6 gezeigt.

Zunächst sei der Fall betrachtet, daß die Schaltungsanordnung zwischen den Punkten 23 und 24 identisch zu den Schaltungsanordnungen zwischen den Punkten 22 und 23 bzw. 22 und 24 ist.

Die maximale Leistung betrage wiederum 21 kW. Im gesamten Leistungsbereich von 0 bis 21 kW läßt sich eine gewünschte Leistung feinstufig, beispielsweise mit einer Stufenweite von 250 W, einstellen, indem ein Teil der Teilwiderstände fest zu- bzw. abgeschaltet ist und in einer Anordnung, beispielsweise zwischen den Verbindungspunkten 22 und 23, auf Teilwiderstände Schwingungspaketsteuerung entsprechend den Ausführungen zu Figur 3 und 4 angewandt wird.

Schwingungspaketsteuerung sollte aus Gründen der entstehenden Netzrückwirkungen in nur einer Anordnung vorgenommen werden. Leistungsänderungen in einer Anordnung, beispielsweise zwischen den Verbindungspunkten 22 und 23, erfolgen wie in den Erläuterungen zu Figur 5 angegeben.

Abweichend davon können Leistungsänderungen in Schritten von 1 kW zyklisch abwechselnd in den drei Anordnungen vorgenommen werden, womit zu allen Zeiten eine angenähert symmetrische Belastung des Dreiphasennetzes vorliegt. Besonders vorteilhaft sind Leistungsänderungen dergestalt vorzunehmen, daß in zweien oder allen Anordnungen gleichzeitig in Schritten von 1 kW zu- oder abgeschaltet wird, womit eine hohe Einstellgeschwindigkeit bei angenähert symmetrischer Belastung des Netzes erreicht wird. Da hierbei $P_{ges}$ in Schritten von 2 kW bzw. 3 kW geändert wird, kann nach grober Annäherung an den Sollwert eine Feineinstellung in Stufen von 2 kW oder 1 kW und anschließende Tastung erfolgen.

Als weiteres Ausführungsbeispiel sei eine Anordnung entsprechend Figur 10 betrachtet, bei der die Schaltungsanordnung zwischen den Verbindungspunkten 23 und 24 abweichend von denen zwischen den Anschlußpunkten 22 und 23 bzw. 22 und 24 ist. Die maximale Gesamtleistung sei wiederum 21 kW. Die Anordnung zwischen den Punkten 23 und 24 bestehe aus zwei gleichen oder ungleichen Widerständen $R_{E1}$ und $R_{E2}$, die zusammen bei Dauereinschaltung wiederum eine Leistung von 7 kW ermöglichen. Im Gegensatz zu den übrigen Teilwiderständen können die Widerstände $R_{E1}$ und $R_{E2}$ nur fest ein- bzw. abgeschaltet werden und werden keiner Schwingungspaketsteuerung unterworfen.

Die Einstellung einer gewünschten Leistung erfolgt, wie bereits angegeben, durch fest ein- und abgeschaltete Teilwiderstände und Überlagerung von Schwingungspaketsteuerungen entweder in der Anordnung zwischen den Punkten 22 und 23 oder in der Anordnung zwischen den Punkten 22 und 24. Leistungsänderungen können wie oben angegeben in Schritten von 1 kW abwechselnd in den Anordnungen zwischen den Punkten 22 und 23 bzw. 22 und 24 oder gleichzeitig in diesen beiden Anordnungen vorgenommen werden.

Abhängig von den Zuständen der Schaltelemente $S_{F1}$ und $S_{F2}$ können vier Zustände der Gesamtanordnung unterschieden werden. Zustandsänderungen erfolgen bei der angegebenen Anordnung durch Ein- bzw. Abschalten der Widerstände $R_{E1}$ bzw. $R_{E2}$, wobei in mindestens einer Anordnung zwischen den Punkten 22 und 23 bzw. zwischen den Punkten 22 und 24 Teilleistungen entgegengesetzt geschaltet werden, wodurch die entstehenden Netzrückwirkungen in den Außenleitern vermindert werden.

Es ist möglich, bei der Anwendung der Schaltung als Leistungsstellglied für einen elektrischen Durchlauferhitzer den Teilwiderstand $R_{E2}$ so auszuführen, daß er ohne Schalter fest an den entsprechenden Außenleitern liegt und in ihm eine Leistung von beispielsweise 4 kW entsteht. Diese Grundleistung von 4 kW ist bei eingeschaltetem Gerät immer eingeschaltet. Abhängig vom Zustand des Schaltelementes $S_{F1}$ ergeben sich dann für die Gesamtanordnung nur noch zwei Zustände. Die Gesamtleistung ist dann zwischen 4 kW und 21 kW feinstufig einstellbar. Zustandsänderungen ergeben sich durch Ein- oder Abschalten des Widerstandes $R_{E1}$, wobei in einer oder beiden Anordnungen zwischen den Punkten 22 und 23 bzw. zwischen den Anschlußpunkten 22 und 24 zur Verminderung der Netzrückwirkungen in den Außenleitern eine Teilleistung entgegengesetzt geschaltet wird. Neben den beschriebenen Detailausführungen kann die Anordnung zwischen den Punkten 23 und 24 auch aus einem ungestuften Widerstand bestehen.

Die Schaltung findet Anwendung bei ohmschen Lasten bzw. komplexen Lasten insbesondere bei Elektrowärmegeräten, wie Durchlauferhitzern und Elektroherden mit Drehstromanschluß.

Sie ist dann sinnvoll anwendbar anstelle einer Ausführung entsprechend Figur 6, wenn die dort auftretenden Unsymmetrien in der Belastung des Netzes als zu groß angesehen werden, die Kostenerhöhung für die zusätzlichen Teilwiderstände und Schalter aber in Kauf genommen wird. Die Schaltung erfordert zur Minimierung der entstehenden Netzrückwirkungen (Flicker) keine feste Anschlußfolge der Außenleiteranschlüsse.

Alle dargestellten Ausführungen stellen Beispiele für die Anwendung der Erfindung dar. Erweiterungen und Modifikationen sind insbesondere hinsichtlich der betrachteten Anzahl der Teilwiderstände nach Figur 3 möglich. Auch hinsichtlich der Größe der Teilwiderstände, sowie der beispielhaft angegebenen Wahl diskreter Tastverhältnisse bei der Anwendung von Wechselspannung sind Variationen möglich. Die gezeigte Anordnung nach Figur 6 sowie eine beschriebene Ausführung der Anordnung nach Figur 10 weisen eine maximale Gesamtleistung von 21 kW auf. In beiden Fällen liegen die entstehenden Netzrückwirkungen (Flicker) bei stationären Leistungseinstellungen deutlich unter den maximal zulässigen Werten. Aus diesem Grunde ist eine Vergrößerung der maximal möglichen Gesamtleistung für beide Anordnungen bis zu etwa 33 kW möglich, ohne daß die zulässigen Netzrückwirkungen im stationären Zustand überschritten werden.

Bei diesen sind lediglich die Teilwiderstände entsprechend umzurechnen, wobei Gesamtanordnung und Steuerungsverfahren erhalten bleiben. Dabei vergrößern sich der kleinste Teilwiderstand und die daran erzeugbare Leistung gegenüber 1 kW entsprechend. Durch weitere Tastverhältnisse ist wieder eine vergleichbare Feineinstellung möglich.

In der Anordnung nach Figur 6 sollte bei größeren maximalen Gesamtleistungen die ungestufte Leistungsstufe durch eine grobgestufte Leistungsstufe, bestehend aus zwei gleichen oder ungleichen Teilwiderständen, ersetzt werden, wodurch die Netzrückwirkungen bei Zustandsumschaltungen vermindert werden.

## Ansprüche

1. Verfahren zum stufenweisen Einstellen einer an einem an Spannung liegenden, aus wenigstens zwei mit je einem Schalter in Reihe geschalteten Teilwiderständen zusammengesetzten Gesamtwiderstand anfallenden elektrischen Leistung, wobei die einzelnen Teilwiderstände in Verbindung mit einer Schwingungspaketsteuerung der Schalter ein-, aus- und umgeschaltet werden, dadurch gekennzeichnet, daß bei Überschreiten der elektrischen Leistung an einem ersten eine kleinere Leistung bei Dauereinschaltung abgebenden Teilwiderstand ein zweiter eine größere Leistung bei Dauereinschaltung abgebender Teilwiderstand für von der Schwingungspaketsteuerung vorgegebene Schwingungspakete eingeschaltet und gleichzeitig der erste Teilwiderstand für diese Schwingungspakete abgeschaltet wird und umgekehrt bei Unterschreiten der elektrischen Leistung.

2. Verfahren nach Anspruch 1, dadurch gekennzeichnet, daß zur Darstellung einer mittleren Leistung, die größer ist als die Leistung eines eine kleinere Leistung bei Dauereinschaltung abgebenden ersten Teilwiderstandes bei Dauereinschaltung und kleiner ist als die Leistung des eine nächstgrößere Leistung bei Dauereinschaltung abgebenden zweiten Teilwiderstandes bei Dauereinschaltung dieser Teilwiderstand schwingungspaketgesteuert eingeschaltet und für die Zeitabschnitte, in denen dieser zweite Teilwiderstand schwingungspaketgesteuert eingeschaltet wird, der erste Teilwiderstand abgeschaltet wird, während für die Zeitabschnitte, in denen der zweite Teilwiderstand abgeschaltet wird, der erste Teilwiderstand eingeschaltet wird.

3. Verfahren nach Anspruch 1, dadurch gekennzeichnet, daß bei mehr als zwei ungleichen Teilwiderständen bei einer Leistung, die von einem oder mehreren eine kleinere Leistung bei Dauereinschaltung abgebenden ersten Teilwiderständen bei dauernder Einschaltung nicht erreicht wird, der eine nächstgrößere Leistung bei Dauereinschaltung abgebender zweite Teilwiderstand schwingungspaketgesteuert eingeschaltet und die ersten Teilwiderstände für diese Schwingungspakete abgeschaltet werden und umgekehrt.

4. Verfahren nach Anspruch 1, dadurch gekennzeichnet, daß bei mehr als zwei ungleichen Teilwiderständen bei einermittleren Leistung, die größer ist als die Summe der Leistungen mehrerer eine kleinere Leistung bei Dauereinschaltung abgebenden ersten Teilwiderstände bei Dauereinschaltung und kleiner ist als die Leistung eines eine größere Leistung bei Dauereinschaltung abgebenden zweiten Teilwiderstandes, ein eine größere Leistung bei Dauereinschaltung abgebender dritter Teilwiderstand schwingungspaketgesteuert eingeschaltet wird und für die Zeitabschnitte, in denen der eine größere Leistung bei Dauereinschaltung abgebende dritte Teilwiderstand eingeschaltet wird, mehrere eine kleinere Leistung bei Dauereinschaltung abgebende erste Teilwiderstände gemeinsam und gleichzeitig abgeschaltet werden, während für die Zeitabschnitte, in denen der eine größere Leistung bei Dauereinschaltung abgebende dritte Teilwiderstand abgeschaltet wird, mehrere eine kleinere Leistung bei Dauereinschaltung abgebende erste Teilwiderstände gemeinsam gleichzeitig eingeschaltet werden, unabhängig davon, ob zur Darstellung der Gesamtleistung weitere Teilwiderstände dauernd fest zu- oder abgeschaltet sind.

5. Verfahren nach einem der Ansprüche 1 bis 4, dadurch gekennzeichnet, daß der Widerstand im dualen System gestuft und die Teilwiderstände parallelgeschaltet sind, wobei jeder Teilwiderstand seinerseits mit einem Schalter in Serie liegt.

6. Verfahren nach Anspruch 1, dadurch gekennzeichnet, daß bei Anwendung auf ein Dreiphasensystem die Widerstandsstufung zwischen einem und zwei anderen Außenleitern identisch ist.

7. Verfahren nach Anspruch 6, dadurch gekennzeichnet, daß sämtliche Schalter ($V_{R1}$, $V_{R2}$, $V_{R3}$) galvanisch in einem Verbindungspunkt (22) mit einem Pol (L1) miteinander verbunden sind.

8. Verfahren nach Anspruch 7, dadurch gekennzeichnet, daß dieser Verbindungspunkt (22) seinerseits mit einem Außenleiter ($L_1$) verbunden ist.

9. Verfahren nach Anspruch 6, dadurch gekennzeichnet, daß in den zwischen jeweils zwei Außenleitern ($L_1$), $L_2$, $L_3$) gebildeten Strängen (19, 20, 21) gleichzeitig geschaltet wird.

10. Verfahren nach Anspruch 1, dadurch gekennzeichnet, daß bei Anwendung auf ein Dreiphasensystem Gruppen von nach dem Verfahren gemäß Anspruch 1 geschalteten Teilwiderständen ($R_{R1}$, $R_{R2}$, $R_{R3}$) zwischen zwei Außenleitern ($L_1$, $L_2$) liegen und daß zwischen diese beiden Außenleiter und dem dritten Außenleiter ($L_3$) der einzelne Widerstand ($R_{F2}$) einer ungestuften Leistungsstufe geschaltet ist bezie-

EP 0 201 573 B1

hungsweise Widerstände ($R_{F0}$, $R_{F1}$) einer grobgestuften Leistungsstufe geschaltet sind (Fig. 6)

11. Verfahren nach einem der Ansprüche 1 bis 10, dadurch gekennzeichnet, daß bei einer Änderung der Verbraucherleistung zunächst die Teilwiderstände der nach dem Verfahren gemäß Anspruch 1 betriebenen feingestuften Leistungsstufe (19) variiert wird.

12. Verfahren nach Anspruch 5, dadurch gekennzeichnet, daß die Darstellung jeder mittleren Gesamtleistung dergestalt erfolgt, daß diese Gesamtleistung im zeitlichen Verlauf maximal Änderungen aufweist, die identisch mit dem Betrag der Leistung sind, die am kleinsten Teilwiderstand bei Dauereinschaltung entsteht.

13. Verfahren nach einem der Ansprüche 1 bis 4, dadurch gekennzeichnet, daß bei Einschalten des eine größere Leistung bei Dauereinschaltung abgebenden zweiten Teilwiderstandes im Rahmen der Schwingungspaketsteuerung ein eine kleinere Leistung bei Dauereinschaltung abgebender erster Teilwiderstand oder mehrere eine kleinere Leistung bei Dauereinschaltung abgebende erste Teilwiderstände oder alle eine kleinere Leistung bei Dauereinschaltung abgebenden ersten Teilwiderstände abgeschaltet werden und umgekehrt.

14. Schaltungsanordnung zur Steuerung der Leistung eines elektrischen Verbrauchers, vorzugsweise Durchlauferhitzers, zur Durchführung des Verfahrens nach Anspruch 10, der eine ungestufte, eine grobgestufte und eine gemäß dem Verfahren nach Anspruch 1 betriebene feingestufte Leistungsstufe ergebende Widerstände aufweist, die in Form von Strängen in Dreieckschaltung mit den Außenleitern eines Dreiphasensystems verbunden sind, wobei der Verbindungspunkt (22) zwischen dem Strang der feingestuften Leistungsstufe (19) und dem Strang der grobgestuften Leistungsstufe (21) an einen ersten Außenleiter ($L_1$) gelegt ist, wobei der Verbindungspunkt (23) zwischen dem Strang der feingestuften Leistungsstufe (19) und dem Strang der ungestuften Leistungsstufe (20) an dem im Phasenwinkel nächstfolgenden Außenleiter ($L_2$) gelegt ist und wobei schließlich der Verbindungspunkt (24) zwischen dem Strang der ungestuften Leistungsstufe (20) und dem Strang der grobgestuften Leistungsstufe (21) an den im Phasenwinkel letztnachfolgenden Außenleiter ($L_3$) gelegt ist.

15. Schaltungsanordnung nach Anspruch 14, dadurch gekennzeichnet, daß eine zyklische Vertauschung der drei Außenleiter vorgesehen ist.

## Claims

1. A method for a stepwise adjustment of an electric power, which is available across a composite resistor to which a voltage is applied and which consists of at least two component resistors connected in series with respective switches, wherein the individual component resistors are turned on, turned off and changed over in conjunction with a burst control of the switches, characterized in that an increase of the electric power which is available across a first component resistor, which during a continuous energization delivers a lower power, a second component resistor, which during a continuous energization delivers a higher power, is turned on for bursts provided by the burst control, and the first component is turned off for said bursts at the sage time, and the reverse action is effected for a decrease of the electric power.

2. A method according to claim 1, characterized in that for providing an intermediate power which is higher than the power from a first component resistor, which during a continuous energization delivers a lower power, and lower than the power from a second component resistor, which during a continuous energization delivers a next higher power, that second component resistor is turned on under burst control and the first component resistor is turned off for the intervals of time in which said second component resistor is turned on under burst control and the first component resistor is turned on for the intervals of time in which the second component resistor is turned off.

3. A method according to claim 1, characterized in that where more than two unequal component resistors are provided and a power is required which by one or more first component resistors, which during a continuous energization deliver a lower power, is not provided during a continuous energization, that second component resistor which delivers a next higher power during continuous energization is turned

16

on under burst control and the second component resistors are turned off for said bursts and vice versa.

4. A method according to claim 1, characterized in that where more than two unequal component resistors are provided and an intermediate power is required, which is higher than the sum of the powers from a plurality of first component resistors, which during a continuous energization deliver a lower power, and lower than the power delivered by a second component resistor, which during a continuous energization delivers a higher power, a third component resistor, which during a continuous energization delivers a higher power, is turned on under burst control, a plurality of first component resistors, which during a continuous energization deliver a lower power, are turned off jointly and at the same time for the intervals of time in which the third component resistor, which during a continuous energization delivers a higher power, is turned on, and a plurality of first component resistors, which during a continuous energization deliver a lower power, are turned on jointly and at the same time for the intervals of time in which the third component resistor, which during a continuous energization delivers a higher power, is turned off, regardless whether additional component resistors are permanently turned on or turned off for the provision of the total power.

5. A method according to any of claims 1 to 4, characterized in that the resistor is graded in the dual system, the component resistors are connected in parallel and each component resistor is connected in series to a switch.

6. A method according to claim 1, characterized in that in a three-phase system the resistance grading between one external conductor and two other external conductors is identical.

7. A method according to claim 6, characterized in that all switches ($V_{R1}$, $V_{R2}$, $V_{R3}$) are conductively interconnected at one pole ($L_1$) by a junction (22).

8. A method according to claim 7, characterized in that that junction (22) is connected to an external conductor ($L_1$).

9. A method according to claim 6, characterized in that switching is effected in the branches (19, 20, 21) which are provided each between two external conductors ($L_1$, $L_2$, $L_3$).

10. A method according to claim 1, characterized in that in a three-phase system groups of component resistors ($R_{R1}$, $R_{R2}$, $R_{R3}$) which are switched by the method of claim 1 are connected between two external conductors ($L_1$, $L_2$) and the individual resistor ($R_{F2}$) of an ungraded power stage is or resistors ($R_{F0}$, $R_{F1}$) of a coarsely graded power stage are connected between said two external conductors and the third external conductor ($L_3$) (Figure 6).

11. A method according to any of claims 1 to 10, characterized in that in case of a change of the consumer power the component resistors of the finely graded power stage (19) operated by the method of claim 1 are varied first.

12. A method according to claim 5, characterized in that an intermediate total power is provided in that the maximum changes of that total power in the course of time are identical to the magnitude of the power which is available from the smallest component resistor during continuous energization.

13. A method according to any of claims 1 to 4, characterized in that when the second component resistor, which during a continuous energization delivers a higher power, is turned on under burst control a first component resistor, which in case of a continuous energization delivers a lower power, or a plurality of first component resistors, which during a permanent energization deliver a lower power, or all first component resistors, which during a continuous energization deliver a lower power, is or are turned off and vice versa.

14. A circuit arrangement for controlling the power of an electric consumer, preferably a flow heater, for carrying out the method of claim 10, which consumer comprises resistors which constitute an ungraded power stage, a coarsely graded power stage and a finely graded power stage that is operated by the method of claim 1 and which are connected as branches of a delta circuit to the external conductors of a three-phase system, wherein the junction (22) between the branch constituted by the finely graded power stage (19) and the branch constituted by the coarsely graded power stage (21) are connected to a first external conductor ($L_1$), the junction (23) between the branch constituted by the finely graded power stage (19) and the branch provided by the ungraded power stage (20) is connected to the next following external conductor ($L_2$) in the phase sequence, and finally the junction (24) between the branch constituted by the coarsely graded power stage (21) is connected to the last succeeding external conductor ($L_3$) in the phase sequence.

15. A circuit arrangement according to claim 14, characterized in that a cyclic interchange of the three external conductors is provided.


**Revendications**

1. Procédé pour le réglage échelonné d'une puissance électrique débitée par une résistance sous tension comprenant au moins deux résistances partielles dont chacune en série avec un interrupteur, ces résistances partielles étant mises en et hors circuit ou commutées par l'action des interrupteurs sous l'effet d'une régulation par concentration d'impulsions, caractérisé par le fait qu'en cas de dépassement de la capacité d'une première résistance partielle débitant en service continu une puissance réduite, une deuxième résistance débitant en service continu une puissance plus grande est mise en circuit, laquelle répond aux concentrations d'impulsions préréglées, la première résistance étant en conséquence mise hors circuit, et inversement dans le cas où la puissance électrique n'est pas atteinte.

2. Procédé suivant la revendication 1, caractérisé par le fait que pour obtenir une puissance moyenne supérieure à la capacité d'une première résistance partielle débitant en service continu une puissance réduite, et inférieure à la capacité d'une deuxième résistance débitant en service continu une puissance plus élevée, cette dernière résistance est mise en circuit du fait de la régulation par concentration d'impulsions, et que pour la durée où cette résistance est en circuit, la première résistance partielle est mise hors circuit, tandis que la deuxième résistance partielle est mise hors circuit pendant que la première est en circuit.

3. Procédé suivant la revendication 1, caractérisé par le fait que s'il existe plus de deux résistances partielles inégales pour une puissance qui n'est pas atteinte en service continu par l'une ou plusieurs des premières résistances partielles débitant en service continu une puissance réduite, la deuxième résistance partielle débitant en service continu une puissance plus élevée, est mise en circuit et que les premières résistances partielles sont mises hors circuit pour ces concentrations d'impulsions, et inversement.

4. Procédé suivant la revendication 1, caractérisé par le fait que s'il existe plus de deux résistances partielles inégales pour une puissance moyenne supérieure à la somme des capacités de plusieurs premières résistances partielles débitant en service continu une puissance réduite, et inférieure à la capacité d'une deuxième résistance partielle débitant en service continu une puissance plus élevée, une troisième résistance débitant en service continu une puissance plus élevée est mise en circuit du fait de la régulation par concentration d'impulsions et que pour la durée où cette dernière résistance est en circuit, plusieurs résistances partielles débitant en service continu une puissance réduite sont simultanément et en commun mises hors circuit, tandis que pour les durées où la troisième résistance débitant en service continu une puissance élevée est mise hors circuit, plusieurs résistances partielles débitant en service continu une puissance réduite sont simultanément et en commun mises en service, indépendamment du fait que pour obtenir la puissance totale voulue d'autres résistances partielles sont en permanence mises continuellement en ou hors circuit.

5. Procédé suivant l'une des revendications 1 à 4, caractérisé par le fait que la résistance dans le système biphasé est échelonnée et les résistances partielles sont mises en parallèle, chacune de ces résistances partielles étant en série avec un interrupteur.

6. Procédé suivant la revendication 1, caractérisé par le fait qu'en cas d'application à une système triphasé, l'échelonnement des résistances entre un et deux autres conducteurs extérieurs est identique.

18

7. Procédé suivant la revendication 6, caractérisé par le fait que tous les interrupteurs ($V_{R1}$, $V_{R2}$, $V_{R3}$) sont reliés galvaniquement entre eux dans un point (22) avec un pôle ($L_1$).

8. Procédé suivant la revendication 7, caractérisé par le fait que le point de connexion (22) est relié à un conducteur extérieur ($L_1$).

9. Procédé suivant la revendication 6, caractérisé par le fait qu'il y a commutation simultanée dans les branches (19, 20, 21) formées entre chaque couple de deux conducteurs extérieurs ($L_1$, $L_2$, $L_3$).

10. Procédé suivant la revendication 1, caractérisé par le fait qu'en cas d'application à un système triphasé, des groupes de résistances partielles ($R_{R1}$, $R_{R2}$, $R_{R3}$) commandées suivant le procédé conformément à la revendication 1, se trouvent entre deux conducteurs extérieurs ($L_1$, $L_2$), et qu'entre ces deux conducteurs extérieurs et le troisième conducteur extérieur ($L_3$) est montée la résistance individuelle ($R_{F2}$) d'un étage de puissance non échelonné, ou sont montées des résistances ($R_{F0}$, $R_{F1}$) d'un étage de puissance gros sièrement échelonné (fig. 6).

11. Procédé suivant l'une des revendications 1 à 10, caractérisé par le fait qu'en cas de variation de la consommation de puissance, d'abord les résistances partielles de l'étage de puissance (19) finement échelonné utilisées suivant le procédé conformément à la revendication 1, sont variées.

12. Procédé suivant la revendication 5, caractérisé par le fait que toute puissance totale moyenne est réalisée en sorte que cette puissance totale présente des variations maximales qui sont identiques avec la puissance débitée par la plus petite résistance partielle en service continu.

13. Procédé suivant l'une des revendications 1 à 4, caractérisé par le fait qu'à la mise en circuit, sous l'effet de la régulation par concentration d'impulsions, d'une deuxième résistance partielle débitant en service continu une puissance élevée, une première résistance partielle débitant en service continu une puissance réduite, ou plusieurs de telles résistances ou toutes les résistances débitant en service continu une puissance réduite, sont mises hors circuit, et inversement.

14. Montage pour la régulation de la puissance d'un utilisateur électrique, de préférence d'un chauffe-eau instantané, en exécution du procédé suivant la revendication 10, lequel comprend des résistances appartenant à un étage de puissance non échelonné, grossièrement échelonné et finement échelonné suivant le procédé conformément à la revendication 1, et reliées sous forme de branches aux conducteurs extérieurs d'un système triphasé par couplage en triangle, le point de connexion (22) entre la branche de l'étage finement échelonné (19) et la branche de l'étage grossièrement échelonnée (21) étant relié à un premier conducteur extérieur ($L_1$), et le point de connexion (23) entre la branche de l'étage finement échelonné (19) et celle de l'étage non échelonné (20) étant relié au conducteur extérieur ($L_2$) suivant, et le point de connexion (24) entre la branche de l'étage non échelonné (20) et celle de l'étage grossièrement échelonné (21) étant relié au dernier conducteur extérieur ($L_3$) de l'angle de phase.

15. Montage suivant la revendication 14, caractérisé par le fait qu'il est prévu un échange cyclique des trois conducteurs extérieurs.

Fig 1

Fig. 2

Fig. 3

Fig. 4

Fig. 5

Fig 6

| $\dfrac{P_{ges}}{KW}$ | $\dfrac{P_R}{KW}$ | $\dfrac{P_{F1}}{KW}$ | $\dfrac{P_{F2}}{KW}$ | $\dfrac{P_R}{KW}$ | $\dfrac{P_{F1}}{KW}$ | $\dfrac{P_{F2}}{KW}$ | $\dfrac{P_R}{KW}$ | $\dfrac{P_{F1}}{KW}$ | $\dfrac{P_{F2}}{KW}$ | $\dfrac{P_R}{KW}$ | $\dfrac{P_{F1}}{KW}$ | $\dfrac{P_{F2}}{KW}$ |
|---|---|---|---|---|---|---|---|---|---|---|---|---|
| 4 | 0 | 0 | 0 | | | | | | | | | |
| 5 | 1 | 0 | 0 | | | | | | | | | |
| 6 | 2 | 0 | 0 | | | | | | | | | |
| 7 | 3 | 0 | 0 | (2) 0 | 3 | 0 | | | | | | |
| 8 | 4 | 0 | 0 | 1 | 3 | 0 | | | | | | |
| 9 | 5 | 0 | 0 | 2 | 3 | 0 | | | | | | |
| 10 | 6 | 0 | 0 | 3 | 3 | 0 | | | | | | |
| 11 | 7 | 0 | 0 | 4 | 3 | 0 | (4) 0 | 0 | 7 | | | |
| 12 | | | (1) | 5 | 3 | 0 | 1 | 0 | 7 | | | |
| 13 | | | | 6 | 3 | 0 | 2 | 0 | 7 | | | |
| 14 | | | | 7 | 3 | 0 | 3 | 0 | 7 | (2) 0 | 3 | 7 |
| 15 | | | | | | (3) | 4 | 0 | 7 | 1 | 3 | 7 |
| 16 | | | | | | | 5 | 0 | 7 | 2 | 3 | 7 |
| 17 | | | | | | | 6 | 0 | 7 | 3 | 3 | 7 |
| 18 | | | | | | | 7 | 0 | 7 | 4 | 3 | 7 |
| 19 | | | | | | | | | (1) | 5 | 3 | 7 |
| 20 | | | | | | | | | | 6 | 3 | 7 |
| 21 | | | | | | | | | | 7 | 3 | 7 |
| Zustand | 1 | | | 2 | | | 3 | | | 4 | | |

(1): $P_{F1} + 3\,KW$, $P_R - 2\,KW$

(2): $P_{F1} - 3\,KW$, $P_R + 2\,KW$

(3): $P_{F2} + 7\,KW$, $P_{F1} - 3\,KW$, $P_R - 3\,KW$

(4): $P_{F2} - 7\,KW$, $P_{F1} + 3\,KW$, $P_R + 3\,KW$

(5): $P_{F2} - 7\,KW$, $P_{F1} - 3\,KW$, $P_R + 2\,KW$

(6): $P_{F2} - 7\,KW$, $P_R + 2\,KW$

Fig. 7

Fig 8

Fig. 9

EP 0 201 573 B1

Fig. 10